Europäisches Patentamt

European Patent Office

Office européen des brevets

(19)

(11) **EP 0 735 746 B1**

(12) **EUROPEAN PATENT SPECIFICATION**

(45) Date of publication and mention
of the grant of the patent:
**08.09.1999 Bulletin 1999/36**

(51) Int Cl.⁶: **H04N 5/44**

(21) Application number: **96104578.8**

(22) Date of filing: **22.03.1996**

(54) **Method and apparatus for motion compensated frame rate upconversion**

Verfahren und Vorrichtung für bewegungskompensierte Erhöhung der Bildfrequenz

Méthode et appareil pour la conversion vers le haut de la fréquence trame compensée en mouvement

(84) Designated Contracting States:
**DE FR GB IT**

(30) Priority: **31.03.1995 EP 95400721**

(43) Date of publication of application:
**02.10.1996 Bulletin 1996/40**

(73) Proprietor: **THOMSON multimedia
92648 Boulogne Cédex (FR)**

(72) Inventor: **Weisser, Martin
77955 Ettenheim (DE)**

(74) Representative:
**Hartnack, Wolfgang, Dipl.-Ing. et al
Deutsche Thomson-Brandt GmbH
Licensing & Intellectual Property,
Karl-Wiechert-Alee 74
30625 Hannover (DE)**

(56) References cited:
**EP-A- 0 466 981        US-A- 4 322 750**

• **IEEE TRANSACTIONS ON CONSUMER
ELECTRONICS, vol. 38, no. 3, 1 August 1992,
pages 168-174, XP000311832 KOIVUNEN T: "A
NOISE-INSENSITIVE MOTION DETECTOR"**
• **PATENT ABSTRACTS OF JAPAN vol. 14, no. 263
(E-938), 7 June 1990 & JP-A-02 081596 (SONX
CORP.), 22 March 1990,**

**Description**

The present invention relates to a method and to an apparatus for motion compensated upconversion.

Background

The existing TV standards have a field frequency of 50 or 59.94 or 60Hz. When such pictures are displayed line flicker can arise in case of special picture content or large area flicker can arise in case of bright pictures, in particular on large screens. Such artefacts can be reduced when a display upconversion is performed in the receiver whereby the field frequency is doubled. However, simple upconversion algorithms like AABB can introduce new motion artefacts. To avoid such artefacts a motion compensation is carried out in the receiver which requires a lot of memory.

Invention

It is one object of the invention to disclose a method of motion compensated upconversion which requires less memory capacity, in particular less line memory capacity. This object is reached by the method disclosed in claim 1.
It is a further object of the invention to disclose an apparatus which utilises the inventive method. This object is reached by the apparatus types disclosed in any of claims 24 to 27.
Motion compensated upconversion requires motion estimation and motion compensated interpolation. A lot of line memories are needed in the motion estimator for motion vector processing. Since such line memories require a significant amount of chip area straight forward circuitry will lead to the need of two integrated circuits for motion compensated upconversion. According to the invention the memory capacity, in particular the number of line delays, can be reduced which allows to build a motion compensated upconverter in one integrated circuit only (apart from the field memories). This is reached by using a special line memory configuration in the motion estimator, taking into account the line memories in noise filter means, and by the use of main block motion vectors and refined subblock motion vectors being finally applied in the motion compensated interpolator.
One field memory is used for doubling the field frequency. This may happen prior to motion estimation or afterwards. Since prior to field frequency doubling the available field processing time is double one would normally try to perform motion estimation in this domain, resulting in cheaper low-speed circuitry.
A second field memory is used in connection with the motion estimator. A third field memory may be necessary for the motion compensated interpolation, which can be accompanied by a predictor, recursive filter means and appropriate processing time delays to perform on the high field frequency signals motion compensated interpolation together with a noise reduction. The invention can be used for e.g. 50/59.94/60/50Hz interlaced to 100/119.88/120/75Hz interlaced upconversion, 50/59.94/60/50Hz interlaced to 100/119.88/120/75Hz proscan upconversion and 50/59.94/60/50Hz proscan to 100/119.88/120/75Hz proscan upconversion.
One advantage of the invention is that even when spatial and recursive temporal noise reduction are added to the motion compensated upconversion (MCU), in a further developed embodiment two field memories only are sufficient to perform all these functions. This can be achieved with special circuitry under the condition that the motion compensated interpolator receives partly the same video input signal as the motion estimator and that, once a wrong motion vector is calculated, the temporal filter will not propagate this error.
Tests have shown that the latter can be achieved due to the kind of control used in the temporal noise reduction and that the error will decay from field to field.
A further advantage of the invention is that motion vectors for large main blocks need to be stored only so that the vector memory can have a low capacity. This can be achieved by calculating from said main block motion vectors refined subblock motion vectors just before they are needed in the processing so that the subblock motion vectors need not to be stored.
This means that the main block motion vectors can be calculated during one output field period and the subblock motion vectors can be calculated, just in time for use in a next output field, during the repetition of the first output field.
Advantageously, the calculation of the motion vectors and/or the temporal filter can be controlled by a computed noise level.
In principle, the inventive method is suited for motion compensated upconversion of interlaced video signals, in which fields of source field frequency are converted to form fields of doubled field frequency and in which motion estimation is performed and motion compensated interpolation on said fields of doubled field frequency is performed, using motion information from said motion estimation, whereby in said motion estimation motion vectors for main blocks and motion vectors for subblocks being smaller than said main blocks are calculated for one input field and the pixels required for this calculation are stored in line memory means for one input field, whereas said motion compensated interpolation is carried out on said subblock motion vectors in subsequent output fields.

Advantageous additional embodiments of the inventive method are resulting from the respective dependent claims.

In principle the inventive apparatus for motion compensated upconversion of interlaced video signals includes:

- second memory means receiving input fields, the input and output of which is connected to a motion estimator which performs field-to-field motion estimation and contains line memory means for storing pixels which are used to calculate motion vectors for main blocks and motion vectors for subblocks being smaller than said main blocks for one input field;
- succeeding first memory means for converting the output fields of said second memory means into fields of doubled field frequency;
- third memory means the input and output of which is connected to a motion compensated interpolator which performs in subsequent output fields field-to-field motion compensation on output signals being derived from the output of said first memory means and which receives said subblock motion vectors from said motion estimator and which delivers the motion compensated upconverted output signals,

or includes:

- first memory means being used for converting source fields into fields of doubled field frequency;
- succeeding second memory means the input and output of which is connected to a motion estimator which performs field-to-field motion estimation and contains line memory means for storing pixels which are used to calculate motion vectors for main blocks and motion vectors for subblocks being smaller than said main blocks for one input field;
- third memory means the input and output of which is connected to a motion compensated interpolator which performs in subsequent output fields field-to-field motion compensation on output signals being derived from the output of said second memory means and which receives said subblock motion vectors from said motion estimator and which delivers the motion compensated upconverted output signals,

or includes:

- first memory means being used for converting source fields into fields of doubled field frequency;
- succeeding second memory means the input and output of which is connected to a motion estimator which performs field-to-field motion estimation and calculates and stores in memory means motion vectors for main blocks for one output field and thereafter calculates for a subsequent output field from said main block motion vectors motion vectors for subblocks being smaller than said main blocks;
- third memory means the input and output of which is connected to a motion compensated interpolator which performs in subsequent output fields field-to-field motion compensation on output signals being derived from the output of said second memory means and which receives said subblock motion vectors from said motion estimator and which delivers the motion compensated upconverted output signals,

or includes:

- first memory means being used for converting source fields into fields of doubled field frequency;
- succeeding second memory means the input signal of which is derived from the output signal of said first memory means and is fed to the first input of a motion compensated interpolator which performs field-to-field motion compensation on output signals being derived from the output of said second memory means and which receives motion information from a motion estimator and which delivers the motion compensated upconverted output signals, whereby the signal at the second input of said motion compensated interpolator is derived from the output signal of said second memory means;
- said motion estimator which receives the output signal of said second memory means at its second input and which performs field-to-field motion estimation, whereby the signal at the first input of this motion estimator is derived from the output signal of said first memory means and the motion estimator calculates and stores in memory means motion vectors for main blocks for one output field and thereafter calculates for a subsequent output field from said main block motion vectors motion vectors for subblocks being smaller than said main blocks.

Advantageous additional embodiments of the inventive apparatus are resulting from the respective dependent claims.

EP 0 735 746 B1

<u>Drawings</u>

Preferred embodiments of the invention are described with reference to the accompanying drawings, which show in:

Fig. 1 block diagram of a first embodiment of a motion compensated upconverter;
Fig. 2 block diagram of a second embodiment of a motion compensated upconverter;
Fig. 3 block diagram of a third embodiment of a motion compensated upconverter;
Fig. 4 block diagram of a fourth embodiment of a motion compensated upconverter;
Fig. 5 block diagram of a fifth embodiment of a motion compensated upconverter;
Fig. 6 basic block diagram of a motion compensated upconverter with two field memories;
Fig. 7 block diagram of a motion compensated upconverter with two field memories and noise reduction;
Fig. 8 main stage time diagram for the upconversion performed in Fig. 2 to 7;
Fig. 9 proscan grid produced in the motion compensated interpolator and estimator;
Fig. 10 horizontal prefilter and subsampling;
Fig. 11 main block and subblock;
Fig. 12 principle of two-sided block matching;
Fig. 13 small positional error for some motion vectors resulting from the subgrid used in the two-sided block matching;
Fig. 14 noise measurement zones;
Fig. 15 possible vectors in a periodic structure;
Fig. 16 current vector block and adjacent vector blocks in more detail;
Fig. 17 vertical motion vector component and vertical transition;
Fig. 18 subblock areas and related mainblocks, the motion vectors of which are used to generate the subblock motion vector;
Fig. 19 three-dimensional grid with subblock errors;
Fig. 20 simplified block diagram for noise reduction;
Fig. 21 first output field for motion compensated interpolation;
Fig. 22 third output field for motion compensated interpolation;
Fig. 23 second output field for motion compensated interpolation in a first mode;
Fig. 24 fourth output field for motion compensated interpolation in the first mode;
Fig. 25 second output field for motion compensated interpolation in a second mode;
Fig. 26 fourth output field for motion compensated interpolation in the second mode;
Fig. 27 soft switch and odd/even select;
Fig. 28 global timing diagram.

<u>Preferred embodiments</u>

The motion compensated upconversion process can be split into the following main stages:

-   Motion estimation, horizontally and vertically, luminance only;
-   Optionally, a noise reduction, spatially and temporally for luminance and temporally only for chrominance;
-   Motion compensated interpolation, luminance and chrominance.

The motion estimator calculates the motion vectors denoted as MVs, the confidence denoted CL belonging to these MVs and one noise level per field denoted N. These results are then used to produce the motion compensated output pixels.

In the following it is considered that in the 50/60Hz domain:

-   odd source fields = source fields 1, 5, ...,
-   even source fields = source fields 3, 7, ...,

and that in the 100/120Hz domain:

-   output field 1 ← from source field 1,
-   output field 2 ← combination of source field 1 and source field 3,
-   output field 3 ← combination of source field 3 and source field 5,
-   output field 4 ← combination of source field 3 and source field 5.

4

The input and output samples are represented by 8 bit words, 0=LSB to 7=MSB. Video input format (4:1:1):

- Y = 16 (black)...240 (white), blank value = 16
- U, V = -112...0...+112, blank value = 0 (2's complement) Video output format (before DAC):
- Y = 0 (ultra black)...255 (ultra white), blank value = 16
- U, V = 0...128...255, blank value = 128.

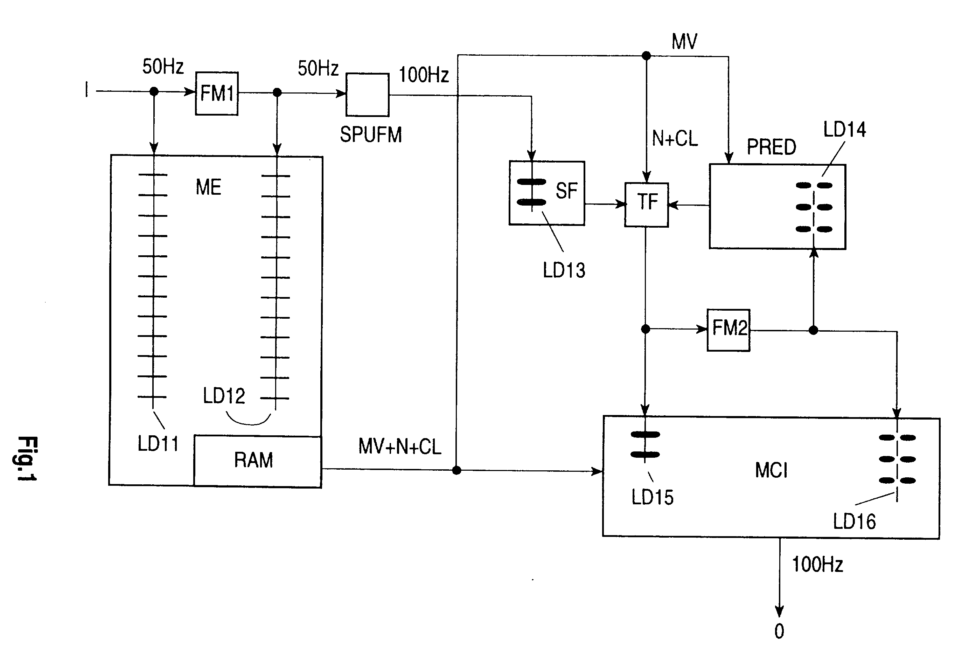

In Fig. 1 a field memory or a FIFO FM1 is connected to two respective input of motion estimator ME and receives the interlaced source signal I. ME operates in the 50Hz domain and contains two delay arrays LD11 and LD12 each of which has 12 line delays. ME calculates motion vectors MV for 16 pixels * 8 lines main blocks MB in a horizontally subsampled proscan pixel grid as explained below. ME may further calculate subblock motion vectors SBMV for 2 pixels * 2 lines subblocks SB from the main block vectors MBMV. The required number of line delays depends on the line number of the main blocks, on the line number of the subblocks and on the possible range of the vertical motion vector components for both. In this example, the MB line number is 8, the SB line number is 2 and the vertical component of both respective motion vectors is 1 which totals in a number of 12 line delays. Since these line delays store horizontally subsampled lines only they may have a length of 704/2 = 352 pixels.

Because MBMV and SBMV are calculated in the 50Hz domain but used in motion compensated interpolator MCI in the 100Hz domain they need to be stored in a vector memory RAM in ME. Since a source frame has e.g. 704 active pixels and 576 active lines and the original main blocks have a size of 32*16 there are (704/32=22)*(576/16=36) = 792 MBMVs and 792*(16/2=8)*(8/2=4) = 25344 SBMVs in the two source fields. As explained later a MBMV and a SBMV can be coded with 6 bits each. For each SBMV a confidence value CL is coded with e.g. 8 bits. Therefore, RAM must be able to store 792*6 + 25344*(6+8) = 359568 bits or 44946 bytes. This corresponds to a memory capacity of $44946/704 \approx 64$ full line delays.

The delay arrays LD11 and LD12 correspond to 12 full line delays. Thus, ME may need a memory capacity of at least 64+12 = 76 full line delays. In 0.5μm chip technology one full line delay requires $\approx 2mm^2$ of chip area which would lead in this example to a total memory chip area in ME of at least 76*2 = 152mm$^2$. However, to have a good yield in the chip production (and thereby cheap chips) the maximum chip area should not exceed 85 to 90mm$^2$ . Thus, at least two integrated circuits (apart from field memories) are required to implement the circuitry of Fig. 1.

The output signal of FM1 passes through a 50Hz to 100Hz speed-up field memory SPUFM performing AABB upconversion directly to the first input of MCI and to the input of a further field memory FM2 which is required for the operation of MCI and the output of which is fed to a second input of MCI. The output signal of SPUFM may also first pass through spatial SF and/or temporal TF noise reduction filter means before entering MCI and FM2.

The output of ME sends motion vectors MV, confidence values CL and/or a noise measure N to the motion compensated interpolator MCI.

Advantageously, the temporal noise reduction filter means TF can be recursive filter means which combine the spatially noise filtered signal with the motion compensated output signal, namely the previous field, of FM2. This motion compensation is performed by a predictor PRED.

Advantageously, TF and MCI can be controlled by the noise level N and the confidence CL as explained below.

The output signal O of motion compensated interpolator MCI is the final motion compensated, upconverted and eventually noise reduced signal to be stored or displayed on a screen.

The processing times within the MCU circuit can easily adapted using appropriate delays, e.g. PTD1 and PTD2 in further figures.

The function of the various blocks will be explained later in connection with the other drawings.

In Fig. 1 to 5 and 7A the parallel bold dashes represent a line delay of full length (e.g. for 704 pixels) and the other parallel dashes depict a half line delay for storing subsampled picture data. The divided parallel bold dashes can be common line delays used in both, MCI and PRED or ME and SF.

These line delays are used to make available in the depicted diagram blocks such prior calculation results which are required when the pixels of the current line are output.

In Fig. 1 SF and MCI need each two full line delays LD13 and LD15. MCI also and PRED need each three full line delays LD16 and LD14 which can be common line delays. Thus, the MCU circuit of Fig. 1 may need apart from field delays a memory capacity of at least 76+2+2+3 = 83 full line delays.

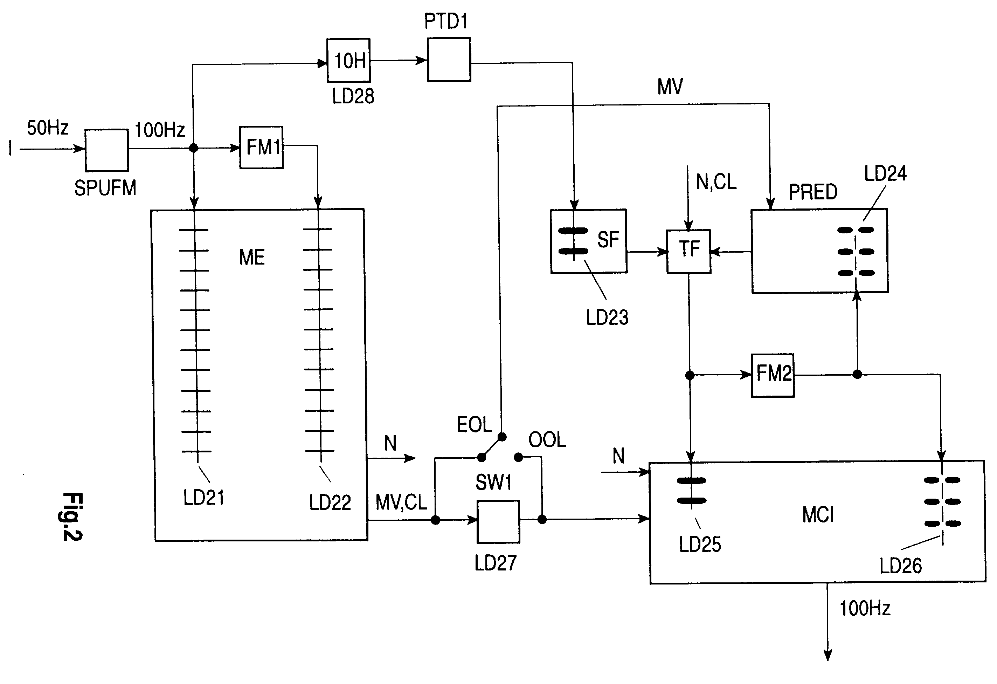

Basically, the embodiment of Fig. 2 basically differs from that of Fig. 1 in that the 50Hz to 100Hz speed-up field memory SPUFM performing AABB upconversion is arranged prior to FM1 and ME and that ME does not store MBMV, SBMV and CL. MBMV and SBMV are calculated in the same field period wherein they are used in MCI. Because it takes some time until the subblock motion vectors SBMV are available a ten-line delay LD 28 is arranged between the output of SPUFM and the filter means SF or FM2, respectively.

The number of line delays in LD28 depends on the block sizes and on the maximum vertical SBMV component size.

A further one-line delay LD 27 is arranged in the MV / CL connection between ME and MCI. In case of even output lines EOL the MV information of the input signal of LD27 is passed via switch SW1 to PRED. In case of odd output lines OOL the MV information of the output signal of LD27 is passed via switch SW1 to PRED. LD27 is written in for one line and read out for two succeeding lines. The reason is that the same SBMV vectors are applied for two lines.

The number of line delays LD21 to LD26 corresponds to that of Fig. 1. This means that about 12+10+2+2+3+1 = 30 full line delays are required for the MCU circuitry of Fig. 2 which corresponds sponds to a chip area of ≈60mm$^2$.

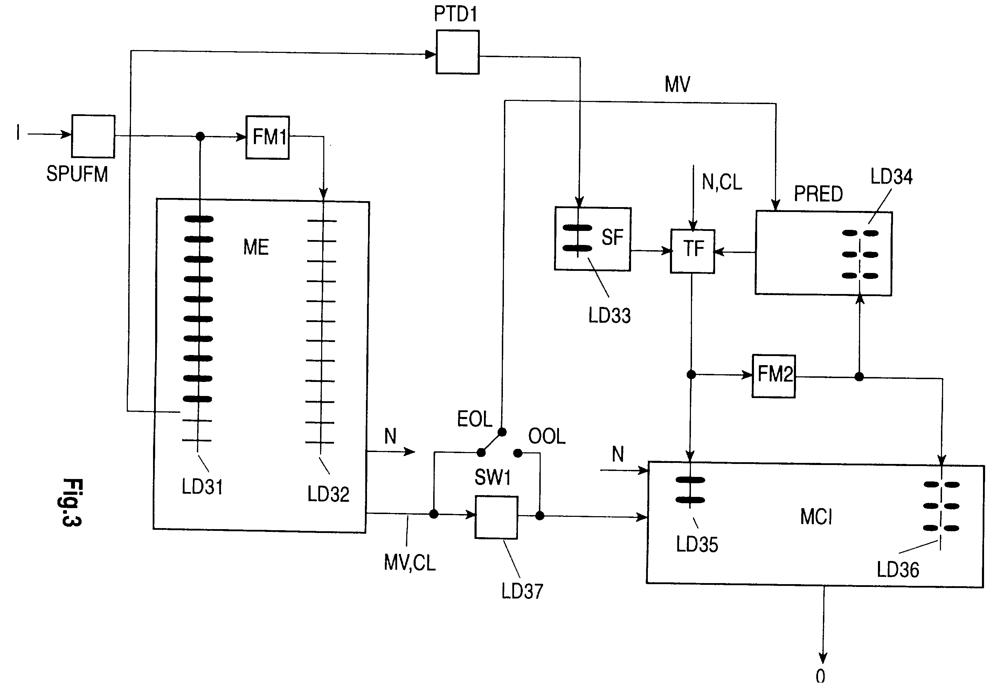

Basically, the embodiment of Fig. 3 differs from that of Fig. 2 in that the first ten line delays of array LD31 perform in addition the function of LD28. This means that these ten line delays need to be full line delays. The number of line delays LD32 to LD37 corresponds to that of Fig. 2. However, the total line delay capacity decreases by five full line delays.

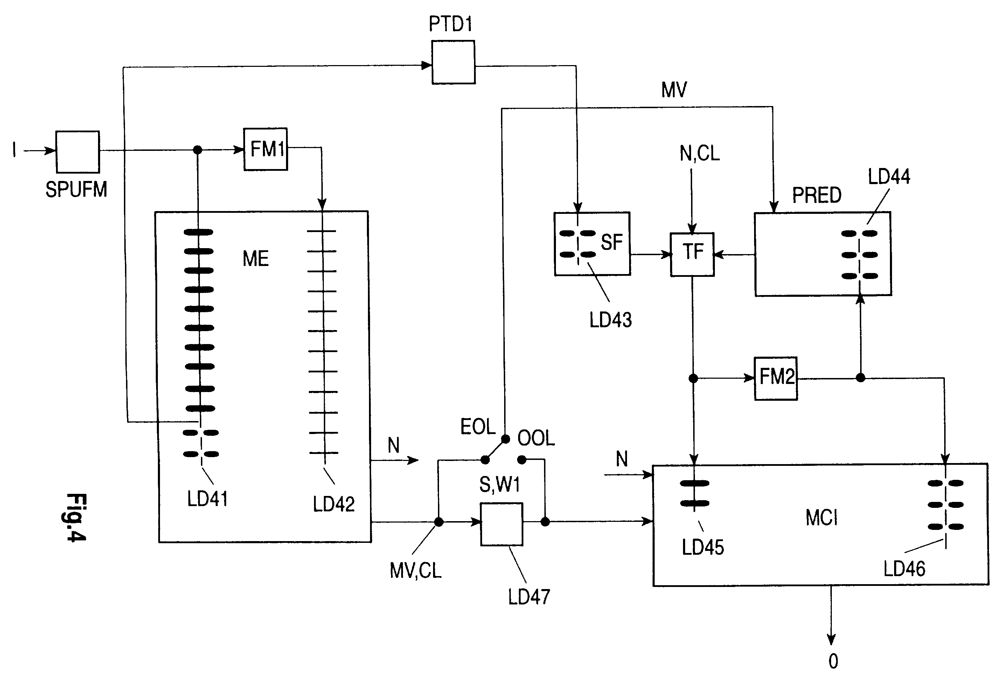

Basically, the embodiment of Fig. 4 differs from that of Fig. 3 in that the two further line delays of LD41 are commonly used for the SF line delays LD43. This means that these two further line delays of LD 41 need to be full line delays, too. The number of line delays LD42 and LD44 to LD47 corresponds to that of Fig. 3. However, the total line delay capacity decreases by one full line delay.

In Fig. 1 to Fig. 4 all MBMV and SBMV vectors are calculated for each source field.

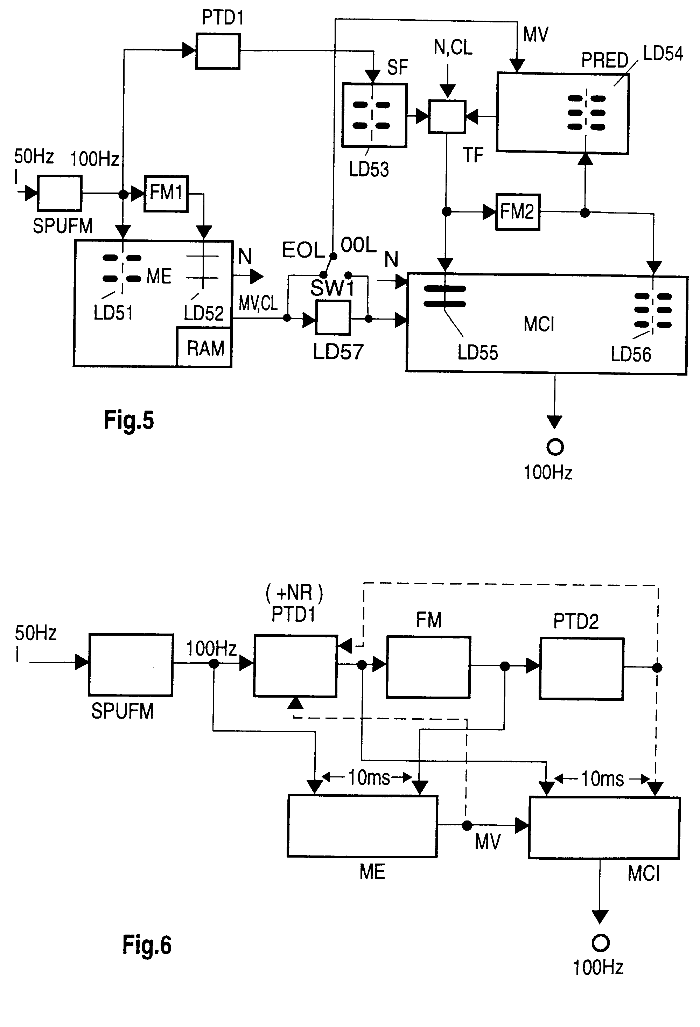

Basically, the embodiment of Fig. 5 differs from that of Fig. 4 in that the MBMV vectors are calculated in a first field whereas the SBMV vectors are calculated in a subsequent field directly before being used so that they need not to be stored. This necessitates on one side that the 792 MBMV vectors are stored with 6 bits each in a memory RAM in ME, but on the other side ME needs only two full line delays LD51 (commonly used for LD53 in SF) and two half line delays LD52. The number of line delays LD44 to LD47 corresponds to that of Fig. 4. However, the total line delay capacity decreases by 10*704 + 10*704/2 - 792*6/8 = 9966 bytes corresponding to ≈14 full line delays. In Fig. 5 a field memory or a FIFO SPUFM is used to double the field frequency of input signal I. The output signal is fed to a motion estimator ME containing a low-capacity vector memory, to a second field memory or FIFO FM1 and to a spatial noise filter SF. A second input of ME is supplied by the output of FM1. The output of ME sends subblock motion vectors MV and some other information to a motion compensated interpolator MCI and to a first input of a predictor PRED. The spatially noise filtered output of SF is fed via a temporal noise filter TF to a first input of MCI and to a third field memory or FIFO FM2. A second input of MCI is supplied by the output of FM2. The output of FM2 is also fed to a second input of predictor PRED. The output of PRED is supplied to a second input of temporal noise filter TF. The output signal O of motion compensated interpolator MCI is the final motion compensated, upconverted and noise filtered signal to be displayed on a screen.

In Fig. 1 to 5 and 7A the parallel bold dashes represent a line delay of full length (e.g. for 704 pixels) and the other parallel dashes depict a half line delay for storing subsampled picture data. The divided parallel bold dashes can be common line delays used in ME, SF, MCI and PRED, respectively.

These line delays are used to make available in the depicted diagram blocks such prior calculation results which are required when the pixels of the current line are output.

Motion estimation chips like STi3220 of SGS-Thomson and two-dimensional interpolation filters like IMSA110 of SGS-Thomson and MPEG2 decoder chips containing a two-dimensional motion compensated interpolator like STi3500 of SGS-Thomson are already on the market.

The different MCU arrangement depicted in the basic block diagram of Fig. 6 needs two field memories only and shows a first field memory or a FIFO SPUFM, a second field memory or FIFO FM, a motion estimator ME and a motion compensated interpolator MCI. Contrary to Fig. 5, the output of SPUFM is connected via a first processing time delay PTD1 to the first input of MCI and to FM. PTD1 represents the processing time needed in ME. The output of FM is connected to the second input of ME and via a second processing time delay PTD2 to the second input of MCI. The delay times of PTD1 and PTD2 are equal. The delay time of FM is one field minus the delay time of PTD1. This means that between the first and second input of ME and between the first and second input of MCI, respectively, a total delay time of one field (e.g. 10ms) is achieved.

The block denoted PTD1 may also contain a noise reduction circuit which receives an input signal from the output of PTD2 and motion information from ME.

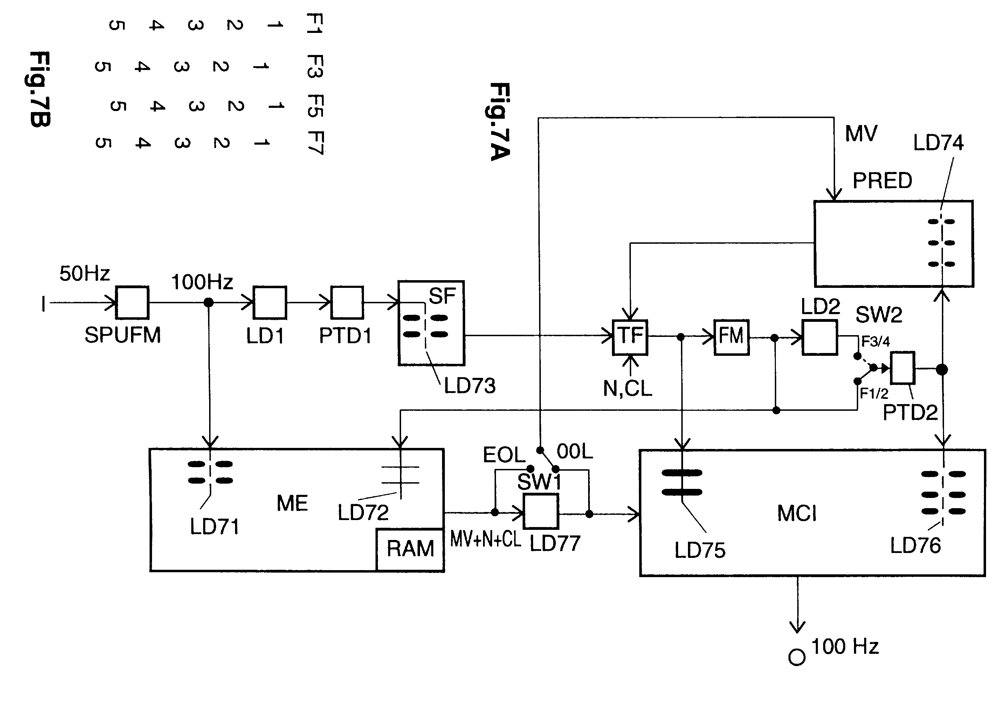

Fig. 7A shows the basic circuitry of Fig. 6 in more detail. In Fig. 7A, the block PTD1+NR of Fig. 6 includes in series a first line delay LD1, a processing time delay PTD1, a spatial noise filter SF and a temporal noise filter TF. The output of FM is passed through a second line delay LD2, the first input of a second switch SW2 and PTD2 to the second input of MCI and to the second input of a predictor PRED. The second input of switch SW2 is connected to the output of FM.

Motion vectors MV and e.g. information on the noise level N and on the confidence CL of the vectors is passed through a third line delay LD77 from ME to MCI. The input of LD77 is connected to the first input of a first switch SW1 and the output of LD77 is connected to the second input of a switch SW1. The output of SW1 supplies motion vectors MV to the first input of PRED. The output of PRED is connected to the second input of temporal noise filter TF. In case of even output lines EOL the first input of SW1 is active whereas in case of odd output lines OOL the second input of SW1 is active. In case of fields 1 and 2 the first input of SW2 is active whereas in case of field 3 and 4 the second input of SW2 is active, i.e. connected to the output of SW2.

Like in Fig. 5 the motion estimator ME includes a vector memory RAM which stores main block motion vectors and can store in addition, like in Fig. 5, main block zero vectors the function of which will be explained below. Line delays LD71 to LD77 have the same number and function as in Fig. 5.

In Fig. 6 and 7A, ME receives a non-noise reduced input signal and a noise reduced input signal on which previously calculated motion vectors have already been applied, whereas MCI receives two noise reduced input signals. FM has a delay of one field minus the delay of TF, e.g. two lines.

Fig. 7B shows such output fields (with line numbers) in signal O which are present in the input signal I. However, fields F1 and F5 are both first fields in the O output frames.

Luminance processing

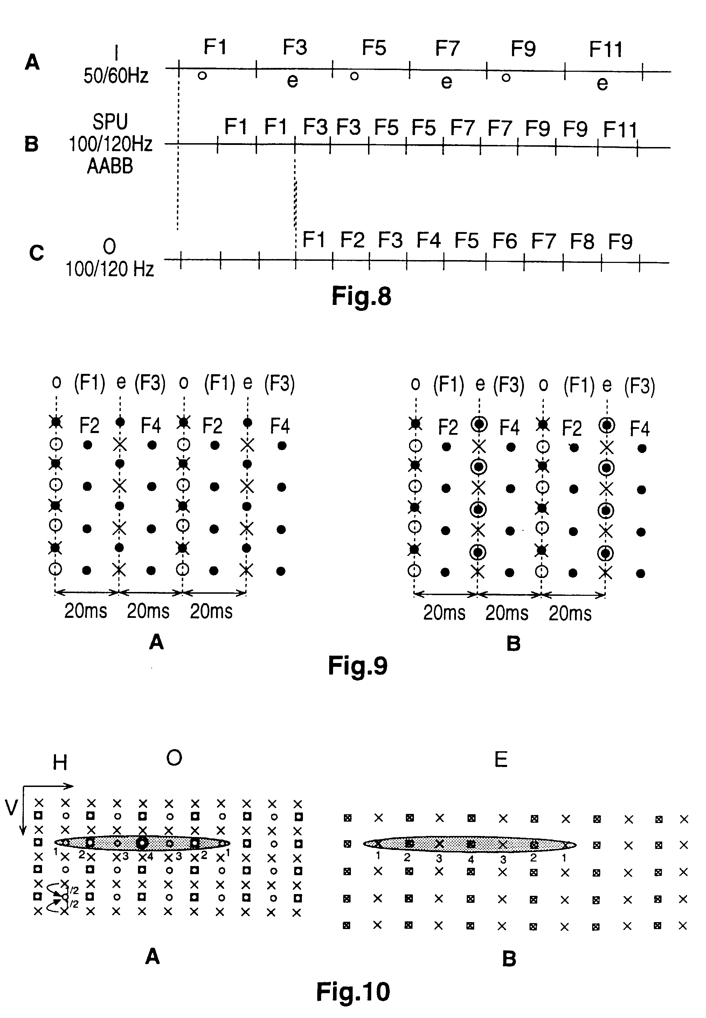

The source signal I, 50/60Hz/2:1/625, is sped up by means of a field memory to a 100/120Hz/2:1/625 AABB field repetition format. The time diagram of Fig. 8 shows the odd (o) / even (e) fields F1, F3, F5, ... of signal I, the sped-up (SPU) fields F1, F1, F3, F3, F5 ... and the fields F1, F2, F3, F4, F5, ... of output signal O.

An intermediate step in the processing is a proscan conversion the grid of which is depicted in Fig. 9. In the motion estimator ME (Fig. 9A) only the luminance odd source fields are vertically interpolated in order to place the lines of the odd and the even field onto a common vertical grid.

In the motion compensated interpolator a proscan grid (Fig. 9B) for both source fields and for luminance as well as for chrominance is produced by means of vertical filters.

In Fig. 9 the following symbols are used:

X  source grid;
O  lines introduced by means of vertical proscan interpolation;
•  spatial position of the output lines.

F1 is a odd (o) source field whereas F3 is an even (e) source field.

As depicted in Fig. 10A for the odd field F1 and in Fig. 10B for the even field F3, in the motion estimator both fields are now horizontally pre-filtered and subsampled. The grid so produced corresponds to the vertically V and horizontally H subsampled proscan grid shown in Fig. 9A. The horizontal pre-filter may have the coefficients (1/16, 2/16, 3/16, 4/16, 3/16, 2/16, 1/16) and is carried out on luminance only. Filtering can be done by first adding, followed by truncation.

In Fig. 10 the following symbols are used:

X source grid;
X or O proscan grid  The O values can be calculated by vertically averaging of X values;
☐  vertically and horizontally subsampled proscan grid (= 1st, 3rd, 5th, ... active pixels). This is the grid used for motion estimation, confidence and noise level calculation;
⊂⊃  subsampling filter. The center pixel denoted by a larger circle is the location for the output pixel.

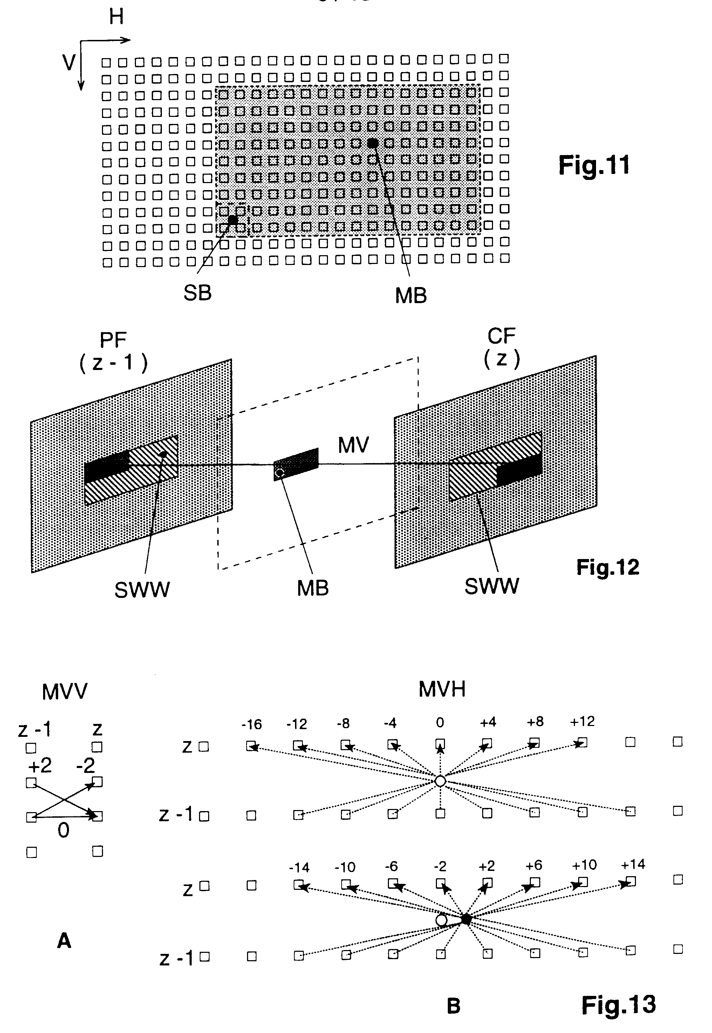

Fig. 11 depicts within the vertically and horizontally subsampled proscan grid a main block MB and a subblock SB. The latter may have a size of 2*2 pixels. A non-subsampled main block has the size of 32 pixels * 16 lines in a frame and the size of 32 pixels *8 lines in a field. A main block has the size of 16 pixels * 8 lines in the horizontally and vertically subsampled proscan grid.

Advantageously, the motion estimator can perform a two sided block matching on large luminance main blocks denoted MB. A main block may have a size of 16 pixels * 8 lines. Two-sided block matching is described in more detail in PCT/EP94/02870 of the applicant.

In the motion estimator each possible MV is applied to each MB. For each motion vector an error E is calculated by accumulating the absolute differences (two's complement) of the corresponding pixels within the main block of the previous field and current field along the motion direction. Then the vector giving the best match, i.e. the smallest error, is chosen as the main block motion vector, denoted MBMV.

If there are several equal smallest errors, i.e. several equally good motion vectors, the vector is chosen in the following order:

1st  MVs with the horizontal component closest to zero;
2nd  MVs with the horizontal component positive;

3rd     MVs with the vertical component closest to zero;
4th     MVs with the vertical component positive.

MV consists of the horizontal component MVH and the vertical component MVV. The horizontal component is positive when the motion on the screen is from left to right. The vertical component is positive when the motion on the screen is from top to bottom.

Fig. 12 depicts the two sided block matching within the specified search windows SWW in the previous field PF (z-1) and in the current field CF (z) whereby for each subsequent main block MB in the field to be interpolated a motion vector MV is generated.

Due to the subgrid used a small positional error of one half subgrid pixel distance can arise for some motion vectors (-14,-10, -6, -2, +2, +6, +10, +14) as can be seen in Fig. 13B. This small error is acceptable.

Fig. 13A shows the vertical motion vector components MVV: +2, 0, -2. In principle, more values for MVV are possible when more line delays are spent. Since line delays are expensive (require large chip area) tests have been carried out which show that for upconversion purposes these three values are sufficient.

Fig. 13B shows the possible horizontal motion vector components MVH. The symbols used have the following meaning:

☐    vertically and horizontally subsampled proscan grid;
○    correct position to calculate motion vectors;
•    slightly wrong position to calculate motion vectors.

One feature of the invention is to use a noise measurement for controlling the motion compensated upconversion. One example of noise measurement which could be used in the invention is described in EP-A-0562407 of the applicant.

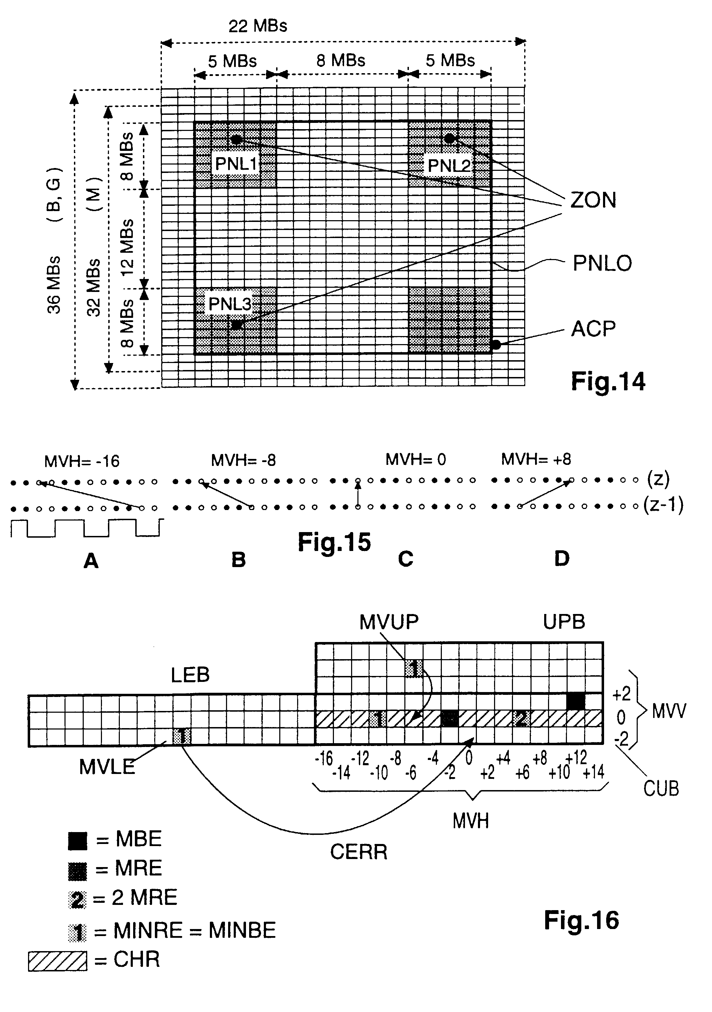

A further noise measurement method will be explained in connection with Fig. 14. In TV standards B and G the active picture ACP has a height of 36 MBs, in TV standard M a height of 32 MBs. One central zone PNL0 or e.g. three (due to a possible picture-in-picture feature) zones PNL1, PNL2 and PNL3 may be used to measure the noise. First, the minimum main block error for each zone is calculated and, second, the three minima are median filtered to give the preliminary noise level PNL. In the current source field z is

PNL      = MEDIAN [PNL1, PNL2, PNL3]
PNL      is divided by 16:
$PN_{(z)}$      = PNL/16

The final noise level $N_{(z)}$ is formed by a further median filtering:

$$N_{(z)} = \text{MEDIAN } [N_{(z-1)}+2, \, [PN_{(z)}+PN_{(z-1)}]/2, \, N_{(z-1)}-2] \qquad \{\text{truncation}\}$$

Hence, the noise estimate is updated once per input field and may change from field to field by a maximum of ±2.

Since $N_{(z)}$ is not known until the end of the current active field, the $N_{(z)}$ can be updated during the blanking period following the calculation of the MBMVs. The $N_{(z)}$ is used by the adaptive temporal noise reduction. In case of 11 bit word length $N_{(z-1)}$ is limited to between 2 and 2045 to avoid underflow and overflow when calculating above median value. $N_{(z)}$ or part of its bits and can be readable via I2C bus.

Power-up initialisation: PNL, $PN_{(z)}$, $PN_{(z-1)} = 0$, $N_{(z-1)} = 2$.

A further feature of the invention is to detect and to take into account periodic structures for controlling the motion compensated upconversion, i.e. for correcting the motion vectors having been found by the two-sided block matching. One example of a periodic structure detection which could be used in the invention is described in EP-A-94115732 of the applicant.

In periodic structures the motion estimation is very hazardous. There are several vectors giving a very good match, i.e. a very small error. Therefore a periodic structure correction, preferably in horizontal direction, is carried out. From the block matching process a corresponding error for every possible main block motion vector is known. Theoretically, a periodic structure in horizontal direction results in several error minima within a row, as can be seen from Fig. 15A to D, but also in several error maxima within the same row. In Fig. 15 the upper row of pixels depicts line n of source field (z) and the lower row line n of source field (z-1). Fig. 15A, B, C, D, respectively, show a first, second, third and fourth possible motion vector for the periodic picture brightness signal (e.g. a fence) depicted in lower Fig.

15A. Hence, if there is a big difference between the maximum and the minimum error and if there is a true second minimum error the current main block is deemed to contain a periodic structure. In case it is confirmed that this block contains a periodic structure then the motion vector belonging to either the upper or the left neighbour main block, that one giving the smaller error, replaces the motion vector found for the current main block. In case of equality preference is given to the left main block vector.

For the first, i.e. upper left, main block in the field the periodic structure correction is switched off. For the remaining part of the first main block row only the left candidate is available. For the remaining part of the first main block column only the upper candidate is available. This leads to the following algorithm:

*If* [(there is a true 2nd Min Row Error)

*and* (2nd Min Row Error - Min Row Error < Max Block Error/2)]

          *then*

               *(if* current block is not most left

        *then* MBMV = MBMV$_{left}$

          if current block is not most up

               *and* MBMV $_{up}$ gives better match

        *then* MBMV=MBMV$_{up}$)

        *else* MBMV = MBMV(corresponding to Min Block Error).

The 2nd Min Row Error must be a true minimum with higher errors at each horizontal side. Therefore it is considered that the borders of a row represent a very small error, i.e. error = zero.

The 2nd Min Row Error is only used to decide whether the current block is periodic or not and hence, if there are several equal 2nd Min Row Errors, it does not matter which one is finally used.

Fig. 16 gives an example showing a current vector range block CUB, a corresponding left block LEB and upper block UPB. MVH is the horizontal motion vector component, MVV is the vertical motion vector component, MVUP is the location of a chosen motion vector from the upper block and MVLE is the location of a chosen motion vector from the left block.

MBE is the location of the maximum block error, MRE is the location of the maximum row error, 2MRE is the second minimum row error, MINRE is the minimum row error which is in this example equal to the minimum block error MINBE, CHR is the chosen row which corresponds to the row with the minimum block error. The arrows starting with locations MVLE and MVUP, respectively, represent such replacement vectors from the adjacent blocks which are chosen according to the corresponding minimum error CERR.

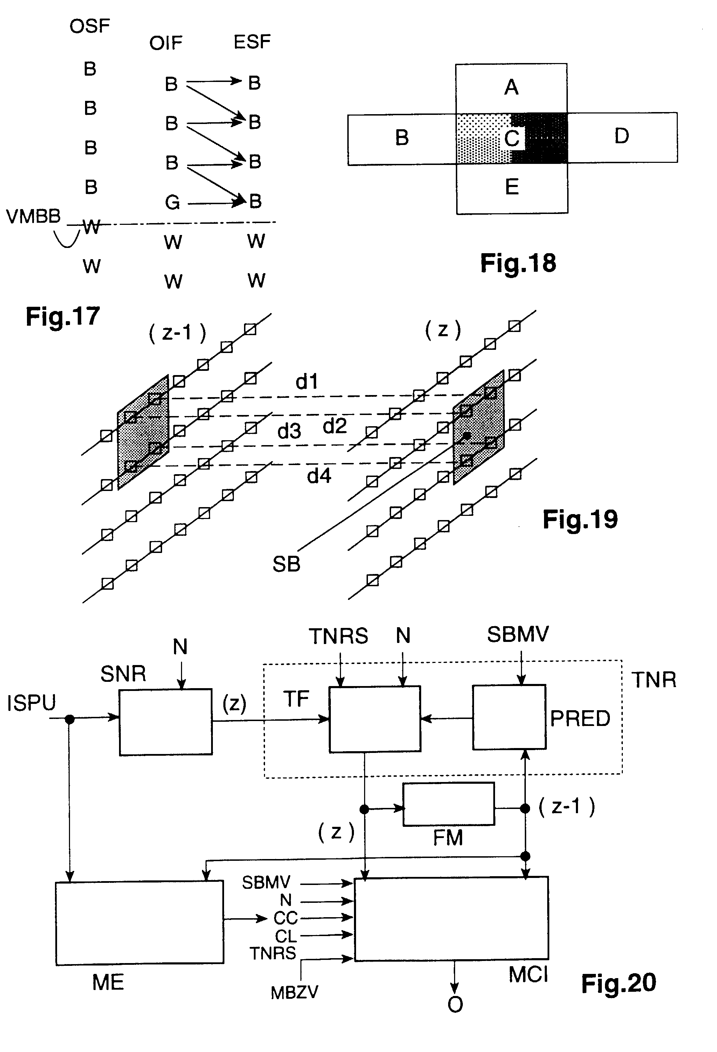

In even output fields the horizontal motion vector component MVH has a slightly bias towards zero to avoid some ambiguity due to noise. The vertical motion vector component MVV suffers a stronger bias towards zero owing to the vertical interpolation of one of the two fields used to calculate the motion vectors. It is important to avoid problems on vertical transitions as depicted in Fig. 17 with a vertical main block border VMBB. Between an odd source field OSF and an even source field ESF an odd interpolated field OIF is formed.

For example, B is a black pixel of value 16, G is a grey pixel of value 128 and W is a white pixel of value 240. Then MBMV(0,0) gives an error of 16 pixels * value 128 = 2048 from the lowest row in the main block above VMBB. MBMV(0,+2) gives an error of zero.

Zero forcing vertical:

*If*      Error(h, 0) $\leq$ [Error(h, v) + 2048]

     *then* MBMV = h, 0

     *else* MBMV = h, v

Zero forcing horizontal (use result from above):

*If*      Error(0, v) $\leq$ [Error(h, v) + 64 + ZFE * N$_{(z)}$/4]

     *then* MBMV = 0, v

     *else* MBMV = h, v

ZFE = Zero Forcing Even fields. ZFE = 0, 1, 2 or 4, can be programmable via I2C-Bus. Default: ZFE = 1. N$_{(z)}$ is the noise level mentioned above.

Zero forcing in output field 3:

Field OF3 is very critical, leading to line flicker, if existing zero motion is not detected. But since the horizontal and the vertical zero forcing to calculate the MBMVs is separated the MBZVs can directly be deduced from the MBMVs.

*If*      (MBMV = 0)      *then* MBZV = 0

     *else* MBZV = 1

The algorithm so far described provides one motion vector per main block. MVH has 16 possible values and can be coded with 4 bits. MVV has 3 possible values and can be coded with 2 bits. A complete active picture (see Fig. 14) has 36 * 22 main blocks which leads to 792 main blocks per current picture (z) which are stored in the vector memory RAM in ME with a word length of 6 bits each. This vector memory stores also the values of the main block zero vectors MBZV for the calculation of output field OF3.

The next step is to use this information to calculate motion vectors specific to smaller areas known as subblocks which have a size of e.g. 2 * 2 pixels on the subsampled proscan grid or 4 * 4 pixels on the proscan grid. One example of subblock motion vector calculation is described in EP-A-94113494 in more detail.

The advantage therefrom is that the subblock motion vectors are calculated directly before they are required and therefore need not to be stored, resulting in a low-capacity RAM in ME. The main block vectors are calculated in a first field, the subblock motion vectors are calculated in the next field.

As motion vector for a particular subblock one of the three spatially nearest neighbour main block motion vectors will be chosen by applying them to the specific subblock and calculating the three corresponding subblock errors SE.

In Fig. 18 the main block C is divided into four areas. Candidate motion vectors for subblocks in the upper left area are chosen from the motion vectors of the nearest main blocks A, B and C. Candidate motion vectors for subblocks in the upper right area are chosen from the motion vectors of the nearest main blocks A, C and D. Candidate motion vectors for subblocks in the lower left area are chosen from the motion vectors of the nearest main blocks B, C and E. Candidate motion vectors for subblocks in the lower right area are chosen from the motion vectors of the nearest main blocks C, D and E.

The subblock errors are calculated by accumulation of the four pixel differences $d_i$ within the area of subblock SB between field (z) and field (z-1), see Fig. 19:

$$SE(x,y) = |d_1| + |d_2| + |d_3| + |d_4|,$$

wherein x,y are the components of one of the three main block motion vectors.

The mainblock motion vector MBMV(x,y) leading to the minimum error SE(x,y) is preliminary chosen for the current block. Subsequently, a 3-tap horizontal median filtering operation is performed for each component SBMVH and SBMVV of the subblock motion vectors to erase single erroneous vectors. The resulting motion vector is then used to calculate the even output field pixels belonging to this subblock. x and y is also the horizontal and vertical subblock position , respectively.

Advantageously, the above calculated subblock error, SE, is directly representative for the confidence of the motion vectors. If SE has a small numerical value the confidence CL is high and vice versa. EP-A-94115733 of the applicant describes a confidence measurement in more detail.

CL can also be calculated in ME in the following way:

$$CL'' = median[SE_{(x-1)}/2, SE_{(x)}/2, SE_{(x+1)}/2]$$

$$CL = CL''/CLdiv \qquad\qquad\qquad (truncation)$$

CL is e.g. limited to 8 bit. CLdiv is a preselected factor 1, 2, 4, 8, which is programmable e.g. via I2C bus.

Default: CLdiv = 2.

The horizontal median filter is applied in order to ensure that, if the confidence is good on both sides of a block boundary, it remains good across a boundary, where the unfiltered confidence is poor.

For a soft switch used in the chrominance processing a chroma confidence CC can also be calculated in ME: CC = CL/2.

Further, a temporal noise reduction on/off signal TNRS depending from the confidence CL and noise level N is created in ME as follows:
If (CL*CLdiv < 2*N)      then TNRS = 1 else TNRS = 0

A further feature of the invention is noise reduction. There are two stages of noise reduction, namely the spatial noise reduction SNR and the temporal noise reduction TNR. The spatial noise reduction is preferably performed on luminance only but can be applied to chrominance also, whereas the temporal noise reduction is preferably performed on both, luminance and chrominance. Fig. 20 shows the common principle for noise reduction in the embodiments according to Fig. 1 to 7A. Additional processing time or line delays are not shown. The sped-up input signal ISPU is first processed in SNR means. However, the order of SNR and TNR could also be vice versa.

The spatial noise reduction SNR can be controlled by the noise level N and is bypassed when N is low, e.g. $N \leq 4$, in order to avoid possible resolution degradation. N comes from motion estimator ME. The spatial noise reduction may be enabled/disabled via I2C bus. Default = enabled.

The spatial noise reduction filter may comprise a horizontal and/or vertical and/or diagonal lowpass filter and/or may comprise a two-dimensional or a directional median filter. In case of directional filtering the filter direction is a function of the correlation of the central pixel with the corresponding neighbouring pixels. The filter operates in a window of e.g. 3*3 pixels and reduces impulse noise but preserves texture, details and edges. The filtering result corresponding to the direction of the minimum correlation is selected as final output pixel value.

Referring again to Fig. 20, the output of SNR passes a temporal noise filter TNR the output of which is input to motion compensated interpolator MCI. Basically, the temporal filter combines data from different fields including the current field. Advantageously, the temporal filter TF (luminance and chrominance) can be a recursive filter with a non-linear coefficient. It is accompanied by the predictor PRED, the interpolator MCI and the field delay FM. TF is controlled by TNRS and N. PRED receives the output signal of field memory FM and subblock motion vectors SBMV from motion estimator ME. For luminance, the predicted subblocks from the spatially and temporally noise reduced source field (z-1) are considered in TF together with the spatially noise reduced source field subblocks of field (z) coming from SNR. The TNR output signal comprises spatially and temporally noise reduced subblocks for source field (z).

If due to noise a wrong motion vector is calculated the recursive temporal filter could propagate this error in terms of partly wrong video information at the wrong spatial position, because ME makes use of motion compensated signals which have been constructed using previously calculated motion vectors. Hence, the calculation of temporally following motion vectors could be wrong. Advantageously, due to the coefficient applied in the temporal noise reduction to the predicted video information, this disturbing effect is decaying from field to field. Careful tests have shown that in fact such errors do not propagate and that therefore the inventive cheaper MCU circuitry can be used.

The coefficient mentioned above allows to add a share of only up to about 3/4 of the predicted video signal to the video signal of the current field. If, e.g. in case of noisy source signals the confidence CL for the motion vectors is lower this share will be reduced and thereby the possible error propagation is decreased even more.

MCI receives from ME the signals SBMV, N, CL, CC and MBZV, the latter of which is the main block zero motion vector from the last motion estimation for source field (z-1).

Luminance processing for the temporal noise reduction on/off signal TNRS:
*if* (TNRSL enabled [via I2C-Bus]) *and* (TNRS = 1)
  *then* temporal noise reduction luma is switched on
  *else* it is bypassed in order to avoid blurring due to estimation failure
Default = TNRSL enabled

Chrominance processing for signal TNRS:
*if* (TNRSC = forced [via I2C-Bus]) *or if* (TNRS = 1)
  *then* temporal noise reduction chroma is switched on
  *else* it is bypassed.
Default = TNRSC forced

Predictor PRED makes use of the subblock motion vectors SBMV to project the previous field in motion direction and, due to interlace, performs an interpolation, e.g. a vertical average, to generate the missing pixels for a non-interlaced picture.

The temporal luminance filter receives the spatially noise reduced current field (z) and the spatially and temporally noise reduced last source field (z-1) coming out of the predictor. The combination, preferably non-linear combination, of both gives the spatially and temporally noise reduced luminance input fields (z) for MCI.

The temporal chrominance filter receives the current field (z) and the temporally noise reduced last source field (z-1) coming out of the predictor. The combination, preferably non-linear combination, of both gives the temporally noise reduced chrominance input fields for interpolator MCI.

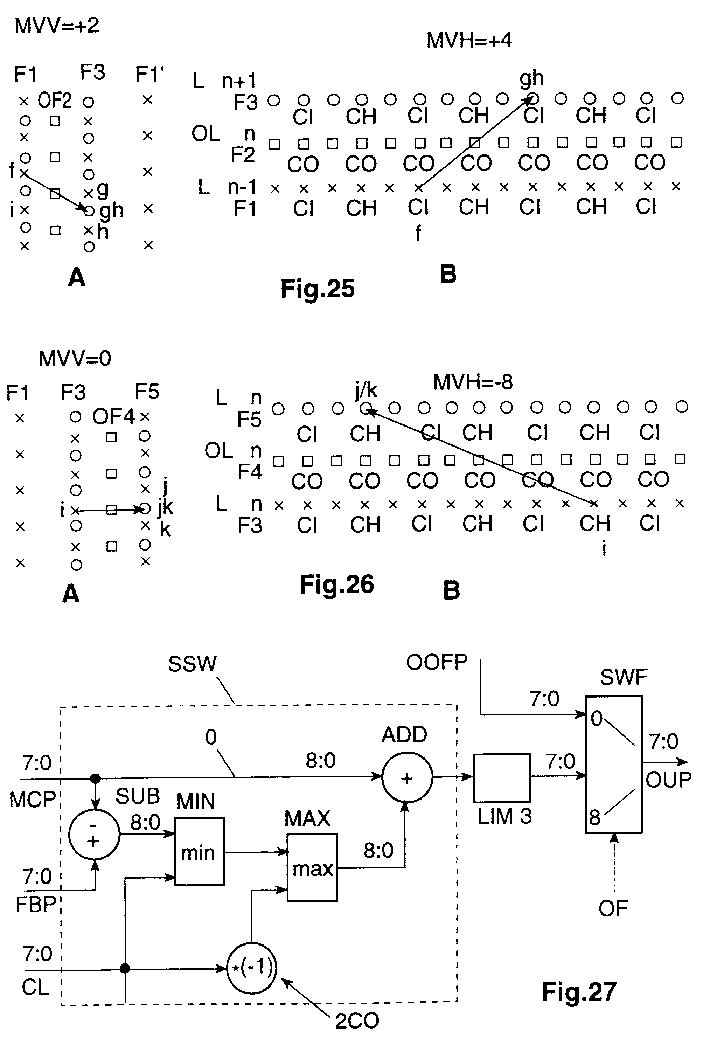

Motion compensated interpolator MCI produces four output fields for every two input fields. Odd first output field OF1 is the noise reduced source field F1 as shown in Fig. 26. F1' is the first field from the next input source frame.

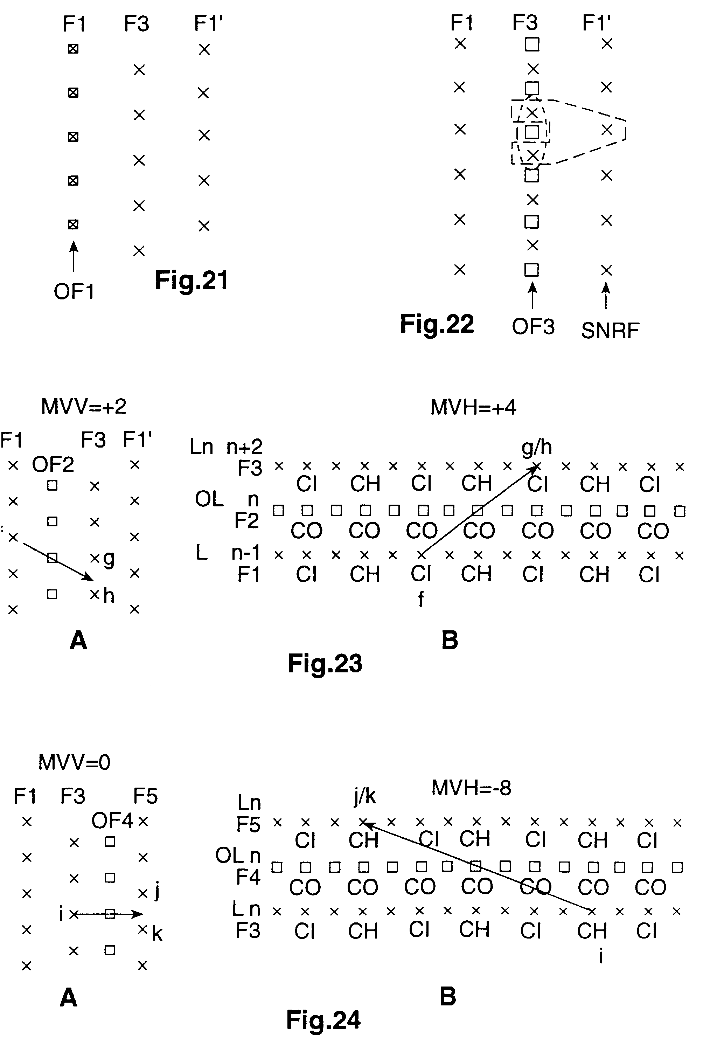

In figures 21 to 26, X denotes input pixels, □ denotes output pixels, CH denotes chroma source pixels, CI denotes horizontally interpolated chroma pixels and CO denotes chroma output pixels.

Note that in Fig. 23B to 26B due to the double sided block matching CI pixels are required for positions of which lie not within the multiple-of-four grid used in the chrominance predictor PRED.

The processing for the third output field OF3 is very special, see Fig. 22. The grid of the noise reduced source field F3 does not match with the grid of the output field OF3, owing to interlace and upconversion. Therefore, depending on the value of the main block zero vector MBZV, one of two different filter types is applied to construct the pixel values for OF3, e.g. a vertical-temporal median filter and a vertical filter with coefficients (1/2, 1/2):
*If* MBZV(z-1) = 0 *then* vertical-temporal median filter *else* vertical filter.

The area with dashed boundaries depicts the pixels involved in the vertical-temporal median filter. Area 0 shows the pixels involved in the vertical filter.

For each pixel in the even output fields OF2 and OF4 a motion compensated pixel and a fall back pixel is calculated. The final luminance output is then, depending on the confidence CL, a combination of the motion compensated pixel value and the fall back pixel value by means of a soft switch which is depicted in Fig. 27.

Advantageously, different processing modes can be used for calculating OF2 and OF4 pixels and these modes can be made selectable via I2C bus.

<u>Mode 1</u> (default):

A vertical temporal median filter is used like that described with Fig. 22. The pixels of output field OF2 are constructed by taking the vertical temporal median (applied in the direction of motion) of the noise reduced field F1 and field F3. In other words, the output pixel is the median value of the pixels f, g and h as shown in Fig. 23A for the vertical vector component MVV and in Fig. 23B for the horizontal vector component MVH. Fig. 23B shows (in the horizontal-temporal domain) the output line n (OLn) of field F2 between lines n and n+2 (Lnn+2) of field F3 and line n-1 (Ln-1) of field F1.

The pixels of output field OF4 are constructed by taking the vertical temporal median (applied in the direction of motion) of the noise reduced field F3 and field F5. In other words, an output pixel is the median value of the pixels i, j and k as shown in Fig. 24A for the vertical vector component MVV and in Fig. 24B for the horizontal vector component MVH. Fig. 24B shows (in the horizontal-temporal domain) the output line n (OLn) of field F4 between line n (Ln) of field F5 and line n (Ln) of field F3.

The fall back pixels for OF2 and OF4 are calculated like the motion compensated pixels above but zero motion is assumed, i.e. SBMV = (0,0). Fallback pixels can also be calculated according to EP-A-94115634 of the applicant.

<u>Mode 2:</u>

A linear average filter is used like that described with Fig. 22. Output field OF2 is the linear average of the noise reduced field F1 and field F3. In other words, an output pixel is 1/2 of pixel f and 1/2 of pixel gh as shown in Fig. 25A for the vertical vector component MVV and in Fig. 25B for the horizontal vector component MVH. Fig. 25B shows (in the horizontal-temporal domain) the output line n (OLn) of field OF2 between lines n+1 (Ln+1) of field F3 and line n-1 (Ln-1) of field F1.

Output field OF4 is the linear average of the noise reduced field F3 and field F5. In other words, an output pixel is 1/2 of pixel i and 1/2 of pixel jk as shown in Fig. 26A for the vertical vector component MVV and in Fig. 26B for the horizontal vector component MVH. Fig. 26B shows (in the horizontal-temporal domain) the output line n (OLn) of field OF4 between lines n (Ln) of field F5 and line n (Ln) of field F3.

As for mode 1, in mode 2 the fall back pixels for OF 2 and OF4 are calculated like the motion compensated pixels as described above, but zero motion is assumed, i.e. SBMV = (0,0).

The circuitry of Fig. 27 is arranged at the output of MCI. Odd output field pixels OOFP are fed to the first input of a switch SWF. The motion compensated pixels MCP are fed to a first input of a soft switch SSW. Fall back pixels are fed to a second input of SSW and the confidence value CL to a third input of SSW. The output signal of SSW passes through limiting means LIM3 (limiting to 0...255) to the second input of switch SWF. In odd output fields the first input of SWF is connected using control signal OF to output OUP. In even output fields the second input of SWF is connected to output OUP.

SSW can be constructed in the following way: The signal from the first input is subtracted from the signal of the second input in subtracting means SUB. The output is fed to the first input of minimum calculation means MIN. The confidence signal CL from the third input is passed to the second input of MIN and via two's complement means 2CO to the second input of maximum calculation means MAX. The first input of MAX receives the output signal of MIN. The output signal of MAX is added to the input signal of the first SSW input in combining means ADD, the result of which is fed to the output of SSW.

<u>Chrominance processing</u>

Basically, the chrominance (U and V) processing can be performed according to the luminance processing. Insofar the block diagrams are used in a similar way for processing the chrominance where not stated oppositely. Preferably, there are one or more of the following differences:

    1) The horizontal component MVH of the motion vector is rounded to the nearest multiple of 4 before being applied to the chrominance to match to the chrominance sampling grid. The following table shows how the components of the motion vectors coming out of ME are applied in PRED and MCI for luminance and chrominance:

| PRED luma | MCI luma | MCI luma | PRED chroma | MCI chroma | MCI chroma |
|---|---|---|---|---|---|
| MVV | Fb | Ff | MVV | Fb | Ff |
| +2 | -1 | +1 | +2 | -1 | +1 |
| 0 | 0 | 0 | 0 | 0 | 0 |
| -2 | +1 | -1 | -2 | +1 | -1 |
| | | | | | |
| MVH | Fb | Ff | MVH | Fb | Ff |
| +14 | -7 | +7 | +12 | -6 | +6 |
| +12 | -6 | +6 | +12 | -6 | +6 |
| +10 | -5 | +5 | +8 | -4 | +4 |
| +8 | -4 | +4 | +8 | -4 | +4 |
| +6 | -3 | +3 | +4 | -2 | +2 |
| +4 | -2 | +2 | +4 | -2 | +2 |
| +2 | -1 | +1 | 0 | 0 | 0 |
| 0 | 0 | 0 | 0 | 0 | 0 |
| -2 | +1 | +1 | 0 | 0 | 0 |
| -4 | +2 | -2 | -4 | +2 | -2 |
| -6 | +3 | -3 | -4 | +2 | -2 |
| -8 | +4 | -4 | -8 | +4 | -4 |
| -10 | +5 | -5 | -8 | +4 | -4 |
| -12 | +6 | -6 | -12 | +6 | -6 |
| -14 | +7 | -7 | -12 | +6 | -6 |
| -16 | +8 | -8 | -16 | +6 | -6 |
| Fb means field backward, Ff means field forward. | | | | | |

2) To allow point 1), additional horizontal linear average filters are needed within the interpolator MCI. Hence, a 4:2:2 format is produced from the 4:1:1 format before the motion vectors are applied to the chrominance pixels.

3) No spatial noise reduction SF is carried out.

4) The interpolation for the even output fields is done like in MODE 2 for luminance (linear average, no programmability).

5) Chrominance confidence CC (used for SSW chroma only), is a half of that of the luminance confidence CL: CC = CL/2 .

6) 4:2:2 → 4:4:4 conversion using linear average (1/2, 1/2).

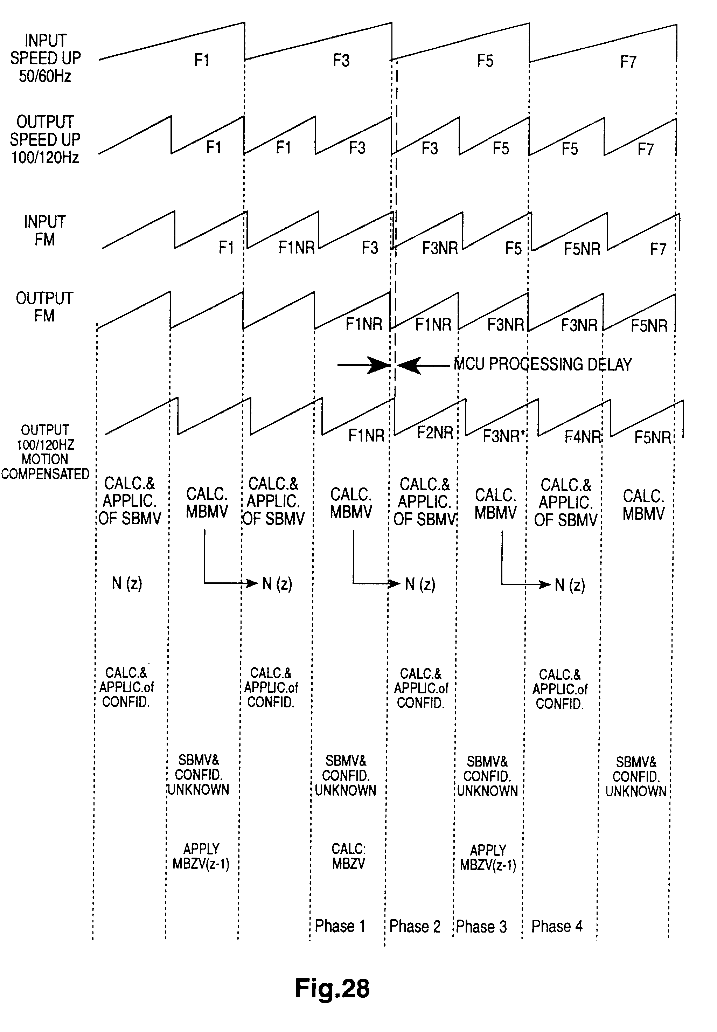

Fig. 28 shows a global timing diagram for the input and output signal of SPUFM, for the input and output signal of FM and for the output signals of ME and MCI. F1NR ... F5NR means noise reduced fields.

There is a special calculation for F3NR". As described above, in case of a main block zero motion vector MBZV value 0 a vertical temporal median filter is applied which has access to the not yet noise reduced field F5. Since SBMV and CL are unknown, MBZV(z-1) is applied. This causes a small temporal error. However, tests have shown that this error is negligible.

The circuitry shown in this invention can be integrated on one or several chips and can be controlled by an I2C bus. Part of the circuitry can be replaced by appropriate software and processor means.

The invention can be used in 4:3 or 16:9 standard definition or high definition units like TV receivers, satellite receivers, VCRs and video disc players.

In case of digital video signals these may be accompanied by motion information. In such case the invention can make use of this already existing motion information, whereby some processing steps concerning the generation of motion information can be omitted or adapted accordingly.

**Claims**

1. Method for motion compensated upconversion of interlaced video signals, in which fields of source field frequency are converted (SPUFM) to form fields of doubled field frequency and in which motion estimation (ME) is performed and motion compensated interpolation (MCI) on said fields of doubled field frequency is performed, using motion information (MV) from said motion estimation, **characterised in** that in said motion estimation motion vectors (MBMV) for main blocks (MB) and motion vectors (SBMV) for subblocks (SB) being smaller than said main blocks are calculated for one input field and the pixels required for this calculation are stored in line memory means (LD11-41, LD12-42) for one input field, whereas said motion compensated interpolation (MCI) is carried out on said subblock motion vectors in subsequent output fields.

2. Method according to claim 1, **characterised in** that said main block motion vectors (MBMV) are calculated and stored (RAM) in memory means for one output field and that said subblock motion vectors (SBMV) are thereafter calculated for a subsequent output field from said stored main block motion vectors.

3. Method according to claim 1 or 2, **characterised in** that a spatial noise reduction (SF) is performed on said fields of doubled field frequency prior to said motion compensated interpolation (MCI), in particular by using at least some of said line memory means (LD11-LD71, LD13-LD73) in common with said spatial noise reduction.

4. Method according to any of claims 1 to 3, **characterised in** that a temporal noise reduction (TF) is included in said motion compensated interpolation, in particular a recursive temporal noise reduction.

5. Method according to any of claims 1 to 4, **characterised in** that for performing said motion compensated interpolation (MCI), subblock motion vectors (SBMV) are calculated from said main block motion vectors (MBMV) by selecting for each output subblock vector one vector from the main block motion vectors of the three main blocks (A, B; B, E; E, D; D, A) lying nearest to the current subblock including the current main block (C).

6. Method according to any of claims 3 to 5, **characterised in** that said spatial noise reduction (SF) is performed on luminance only and that said temporal noise reduction (TF) is performed on luminance and/or chrominance.

7. Method according to any of claims 1 to 6, **characterised in** that said motion compensated interpolation (MCI) is carried out for luminance and chrominance.

8. Method according to any of claims 1 to 7, **characterised in** that in said motion compensated interpolation (MCI) for each pair of source fields four output fields (OF1, OF2, OF3, OF4) are generated whereby:

   - the first output field (OF1) is derived from the first source field of the current pair;
   - the second output field (OF2) is a combination of the first and the second source field of the current pair;
   - the third (OF3) and the fourth (OF4) output field is a combination of the second source field of the current pair and the first source field of the next pair.

9. Method according to any of claims 1 to 8, **characterised in** that in said motion estimation (ME) a proscan conversion (Fig. 8) on every second source field is used.

10. Method according to claim 9, **characterised in** that in said motion estimation (ME) said proscan conversion is based on a horizontally subsampled pixel grid.

11. Method according to any of claims 1 to 10, **characterised in** that in said motion estimation (ME) a two-sided block matching (Fig. 11) is performed.

12. Method according to any of claims 1 to 11, **characterised in** that in said motion estimation (ME) a periodic structure detection is performed which is used to correct said motion vectors (MBMV).

13. Method according to any of claims 1 to 12, **characterised in** that in said motion estimation (ME) one or both of the components (MVH, MVV) of said motion vectors (MBMV) are forced towards zero depending on a calculated noise level (N).

14. Method according to any of claims 5 to 13, **characterised in** that a horizontal or vertical median filtering is performed on one or both components (SBMVH, SBMVV) of said subblock motion vectors (SBMV).

15. Method according to any of claims 5 to 14, **characterised in** that for subblock motion vectors (SBMV) a confidence (CL) is calculated from a subblock error (SE) and that for chrominance a chrominance confidence (CC) depending on said confidence (CL) can be calculated in addition.

16. Method according to claim 15, **characterised in** that said spatial (SF) and/or temporal (TF) noise reduction is controlled by said confidence (CL) and chrominance confidence (CC), respectively.

17. Method according to any of claims 3 to 16, **characterised in** that said spatial noise reduction (SF) includes a directional filter, in particular a median filter.

18. Method according to any of claims 4 to 17, **characterised in** that said temporal noise reduction (TF) includes a predictor (PRED) for motion compensation of respective pixels from the previous field (z-1).

19. Method according to claim 18, **characterised in** that said recursive temporal noise reduction (TF) performs a non-linear combination of pixels from the spatially noise reduced current field (z, CUF) and the spatially and/or temporally noise reduced and motion compensated last source field (z-1, PPRF) coming out of said predictor (PRED).

20. Method according to any of claims 8 to 19, **characterised in** that from block matching errors resulting from said motion estimation (ME) a main block zero vector is calculated which controls which of at least two different interpolation filter types is used to construct the third output field (OF3), wherein one of these filter types includes a temporal component.

21. Method according to any of claims 15 to 20, **characterised in** that for constructing the second (OF2) and the fourth (OF4) output field, controlled by said confidence (CL) and chrominance confidence (CC), respectively, a combination of:

    - either vertically-temporally interpolated or vertically interpolated pixels for both, the second (OF2) and the fourth (OF4) output field;
    - fallback pixels is used, wherein in both cases the fallback pixels are used without motion compensation.

22. Method according to any of claims 18 to 21, **characterised in** that said predictor (PRED) uses chrominance pixels (CH) that are horizontally subsampled by a factor of four with respect to the luminance pixels (O).

23. Method according to claim 21 or 22, **characterised in** that for constructing the second (OF2) and the fourth (OF4) chrominance output field, controlled by said confidence (CL) and chrominance confidence (CC), respectively, a combination of:

    - only vertically interpolated pixels for both, the second (OF2) and the fourth (OF4) output field;
    - fallback pixels is used, wherein the fallback pixels are used without motion compensation.

24. Apparatus for motion compensated upconversion of interlaced video signals, related to a method according to any of claims 1 to 23 and including:

    - second memory means (FM1) receiving input fields, the input and output of which is connected to a motion estimator (ME) which performs field-to-field motion estimation and contains line memory means (LD11-41, LD12-42) for storing pixels which are used to calculate motion vectors (MBMV) for main blocks (MB) and motion vectors (SBMV) for subblocks (SB) being smaller than said main blocks for one input field;
    - succeeding first memory means (SPUFM) for converting the output fields of said second memory means into fields of doubled field frequency;
    - third memory means (FM2) the input and output of which is connected to a motion compensated interpolator (MCI) which performs in subsequent output fields field-to-field motion compensation on output signals being derived from the output of said first memory means and which receives said subblock motion vectors from said motion estimator and which delivers the motion compensated upconverted output signals (O).

25. Apparatus for motion compensated upconversion of interlaced video signals, related to a method according to any of claims 1 to 23 and including:

- first memory means (SPUFM) being used for converting source fields (I) into fields of doubled field frequency;
- succeeding second memory means (FM1) the input and output of which is connected to a motion estimator (ME) which performs field-to-field motion estimation and contains line memory means (LD11-41, LD12-42) for storing pixels which are used to calculate motion vectors (MBMV) for main blocks (MB) and motion vectors (SBMV) for subblocks (SB) being smaller than said main blocks for one input field;
- third memory means (FM2) the input and output of which is connected to a motion compensated interpolator (MCI) which performs in subsequent output fields field-to-field motion compensation on output signals being derived from the output of said second memory means and which receives said subblock motion vectors from said motion estimator and which delivers the motion compensated upconverted output signals (O).

26. Apparatus for motion compensated upconversion of interlaced video signals, related to a method according to any of claims 1 to 23 and including:

- first memory means (SPUFM) being used for converting source fields (I) into fields of doubled field frequency;
- succeeding second memory means (FM1) the input and output of which is connected to a motion estimator (ME) which performs field-to-field motion estimation and calculates and stores in memory means (RAM) motion vectors (MBMV) for main blocks (MB) for one output field and thereafter calculates for a subsequent output field from said main block motion vectors motion vectors (SBMV) for subblocks (SB) being smaller than said main blocks;
- third memory means (FM2) the input and output of which is connected to a motion compensated interpolator (MCI) which performs in subsequent output fields field-to-field motion compensation on output signals being derived from the output of said second memory means and which receives said subblock motion vectors from said motion estimator and which delivers the motion compensated upconverted output signals (O).

27. Apparatus for motion compensated upconversion of interlaced video signals, related to a method according to any of claims 1 to 23 and including:

- first memory means (SPUFM) being used for converting source fields (I) into fields of doubled field frequency;
- succeeding second memory means (FM) the input signal of which is derived from the output signal of said first memory means and is fed to the first input of a motion compensated interpolator (MCI) which performs field-to-field motion compensation on output signals being derived from the output of said second memory means and which receives motion information from a motion estimator (ME) and which delivers the motion compensated upconverted output signals (O), whereby the signal at the second input of said motion compensated interpolator is derived from the output signal of said second memory means;
- said motion estimator (ME) which receives the output signal of said second memory means at its second input and which performs field-to-field motion estimation, whereby the signal at the first input of this motion estimator is derived from the output signal of said first memory means and the motion estimator calculates and stores in memory means (RAM) motion vectors (MBMV) for main blocks (MB) for one output field and thereafter calculates for a subsequent output field from said main block motion vectors motion vectors (SBMV) for subblocks (SB) being smaller than said main blocks.

28. Apparatus according to any of claims 24 to 27, **characterised in** that said motion compensated interpolator (MCI) is accompanied by spatial noise reduction means (SF) and/or succeeding temporal noise reduction means (TF), in particular recursive temporal noise reduction means, whereby the input signal of said spatial noise reduction means or said temporal noise reduction means, respectively, is derived from said fields of doubled field frequency and the final output of the noise reduction means is fed to the first input of said motion compensated interpolator.

29. Apparatus according to claim 28, **characterised in** that said temporal noise reduction means (TF) are recursive temporal noise reduction means.

30. Apparatus according to any of claims 24 to 29, **characterised in** that said subblock motion vectors (SBMV) are calculated from said main block motion vectors (MBMV) by selecting for each output subblock vector one vector from the main block motion vectors of the three main blocks (A, B; B, E; E, D; D, A) lying nearest to the current subblock including the current main block (C).

31. Apparatus according to any of claims 28 to 30, **characterised in** that said spatial noise reduction (SF) is performed on luminance only and that said temporal noise reduction (TF) is performed on luminance and/or chrominance.

**32.** Apparatus according to any of claims 24 to 31, **characterised in** that said motion compensated interpolation (MCI) is carried out for luminance and chrominance.

**Patentansprüche**

1. Verfahren zur bewegungskompensierten Aufwärts-Umwandlung von Zeilensprung-Videosignalen, bei dem Halbbilder mit der Quellen-Halbbildfrequenz umgewandelt werden (SPUFM), um Halbbilder mit der doppelten Halbbildfrequenz zu bilden, und bei dem eine Bewegungsabschätzung (ME) durchgeführt wird und eine bewegungskompensierte Interpolation (MCI) bei diesen Halbbildern mit der doppelten Halbbildfrequenz unter Verwendung der Bewegungsinformation (MV) von der Bewegungsabschätzung durchgeführt wird, dadurch gekennzeichnet, daß bei der Bewegungsabschätzung Bewegungsvektoren (MBMV) für Hauptblöcke (MB) und Bewegungsvektoren (SBMV) für Unterblöcke (SB), die kleiner als die Hauptblöcke sind, für ein Eingangs-Halbbild berechnet und die für diese Berechnung benötigten Pixel in Zeilen-Speichermitteln (LD11 - 41, LD12 - 42) für ein Eingangs-Halbbild gespeichert werden, während die bewegungskompensierte Interpolation (MCI) bei den Unterblock-Bewegungsvektoren in nachfolgenden Ausgangs-Halbbildern durchgeführt wird.

2. Verfahren nach Anspruch 1, dadurch gekennzeichnet, daß die Hauptblock-Bewegungsvektoren (MBMV) berechnet und in Speichermitteln (RAM) für ein Ausgangs-Halbbild gespeichert werden, und daß die Unterblock-Bewegungsvektoren (SBMV) anschließend für ein nachfolgendes Ausgangs-Halbbild von den gespeicherten Hauptblock-Bewegungsvektoren berechnet werden.

3. Verfahren nach Anspruch 1 oder 2, dadurch gekennzeichnet, daß eine räumliche Rauschverminderung (SF) bei den Halbbildern mit der doppelten Halbbildfrequenz vor der bewegungskompensierten Interpolation (MCI) durchgeführt wird, insbesondere durch Verwendung von wenigstens einigen der Zeilenspechermittel (LD11 - LD71, LD13 - LD73) gemeinsam mit der räumlichen Rauschverminderung.

4. Verfahren nach einem der Ansprüche 1 bis 3, dadurch gekennzeichnet, daß eine zeitliche Rauschverminderung (TF) in der bewegungskompensierten Interpolation enthalten ist, insbesondere eine rekursive zeitliche Rauchverminderung.

5. Verfahren nach einem der Ansprüche 1 bis 4, dadurch gekennzeichnet, daß zur Ausführung der bewegungskompensierten Interpolation (MCI) Unterblock-Bewegungsvektoren (SBMV) aus den Hauptblock-Bewegungsvektoren (MBMV) berechnet werden, indem für jeden Ausgangs-Unterblock-Vektor ein Vektor aus den Hauptblock-Bewegungsvektoren von den drei Hauptblöcken (A, B; B, E; E, D; D, A) ausgewählt wird, die dem gegenwärtigen Unterblock einschließlich dem gegenwärtigen Hauptblock (C) am nächsten liegen.

6. Verfahren nach einem der Ansprüche 3 bis 5, dadurch gekennzeichnet, daß die räumliche Rauschverminderung (SF) nur für die Luminanz ausgeführt wird, und daß die zeitliche Rauschverminderung (TF) für die Luminanz und/ oder die Chrominanz durchgeführt wird.

7. Verfahren nach einem der Ansprüche 1 bis 6, dadurch gekennzeichnet, daß die bewegungskompensierte Interpolation (MCI) für Luminanz und Chrominanz durchgeführt wird.

8. Verfahren nach einem der Ansprüche 1 bis 7, dadurch gekennzeichnet, daß bei der bewegungskompensierten Interpolation (MCI) für jedes Paar von Quellen-Halbbildern vier Ausgangs-Halbbilder (OF1, OF2, OF3, OF4) erzeugt werden, wobei

- das erste Ausgangs-Halbbild (OF1) von dem ersten Quellen-Halbbild des gegenwärtigen Paares abgeleitet wird;
- das zweite Ausgangs-Halbbild (OF2) eine Kombination des ersten und zweiten Quellen-Halbbildes des gegenwärtigen Paares ist;
- das dritte (OF3) und das vierte (OF4) Ausgangs-Halbbild eine Kombination des zweiten Quellen-Halbbildes des gegenwärtigen Paares und des ersten Quellen-Halbbildes des nächsten Paares ist.

9. Verfahren nach einem der Ansprüche 1 bis 8, dadurch gekennzeichnet, daß bei der Bewegungsabschätzung (ME) eine Proscan-Umwandlung (Fig. 8) bei jedem zweiten Quellen-Halbbild verwendet wird.

10. Verfahren nach Anspruch 9, dadurch gekennzeichnet, daß bei der Bewegungsabschätzung (ME) die Proscan-Umwandlung auf einem horizontal unterabgetasteten Pixelgitter beruht.

11. Verfahren nach einem der Ansprüche 1 bis 10, dadurch gekennzeichnet, daß bei der Bewegungsabschätzung (ME) eine zweiseitige Blockanpassung (Fig. 11) ausgeführt wird.

12. Verfahren nach einem der Ansprüche 1 bis 11, dadurch gekennzeichnet, daß bei der Bewegungsabschätzung (ME) eine periodische Strukturfeststellung durchgeführt wird, die zur Korrektur der Bewegungsvektoren (MBMV) verwendet wird.

13. Verfahren nach einem der Ansprüche 1 bis 12, dadurch gekennzeichnet, daß bei der Bewegungsabschätzung (ME) in Abhängigkeit von einem berechneten Rauschpegel (N) eine oder beide Komponenten (MVH, MVV) der Bewegungsvektoren (MBMV) gegen null gezwungen werden.

14. Verfahren nach einem der Ansprüche 5 bis 13, dadurch gekennzeichnet, daß für eine oder beide Komponenten (SBMVH, SBMVV) der Unterblock-Bewegungsvektoren (SBMV) eine vertikale Median-Filterung durchgeführt wird.

15. Verfahren nach einem der Ansprüche 5 bis 14, dadurch gekennzeichnet, daß für Unterblock-Bewegungsvektoren (SBMV) eine Zuverlässigkeit (CL) (Konfidenz) aus einem UnterblockFehler (SE) berechnet wird, und daß zusätzlich für die Chrominanz eine Chrominanz-Zuverlässigkeit (CC) in Abhängigkeit von der Zuverlässigkeit (CL) berechnet werden kann.

16. Verfahren nach Anspruch 15, dadurch gekennzeichnet, daß die räumliche (SF) und/oder die zeitliche (TF) Rauschverminderung durch die Zuverlässigkeit (CL) bzw. die Chrominanz-zuverlässigkeit (CC) gesteuert wird.

17. Verfahren nach einem der Ansprüche 3 bis 16, dadurch gekennzeichnet, daß die räumliche Rauschverminderung (SF) ein Richtungsfilter, insbesondere ein Median-Filter enthält.

18. Verfahren nach einem der Ansprüche 4 bis 17, dadurch gekennzeichnet, daß die zeitliche Rauschverminderung (TF) einen Prediktor (PRED) für die Bewegungskompensation entsprechender Pixel aus dem vorherigen Halbbild (z-1) enthält.

19. Verfahren nach Anspruch 18, dadurch gekennzeichnet, daß die rekursive zeitliche Rauschverminderung (TF) eine nicht lineare Kombination von Pixeln aus dem räunlich rauschverminderten gegenwärtigen Halbbild (z, CUF) und aus dem räumlich und/oder zeitlich rauschverminderten und bewegungskompensierten letzten Quellen-Halbbild (z-1, PPRF) ausführt, die aus dem Prediktor (PRED) herauskommen.

20. Verfahren nach einem der Ansprüche 8 bis 19, dadurch gekennzeichnet, daß aus Blockanpassungsfehlern, die von der Bewegungsabschätzung (ME) herrühren, ein Hauptblock-Null-Vektor berechnet wird, der steuert, welcher der wenigstens zwei unterschiedlichen Interpolations-Filtertypen verwendet wird, um das dritte Ausgangs-Halbbild (OF3) aufzubauen, wobei einer dieser Filtertypen eine zeitliche Komponente enthält.

21. Verfahren nach einem der Ansprüche 15 bis 20, dadurch gekennzeichnet, daß für den Aufbau des zweiten (OF2) und des vierten (OF4) Ausgangs-Halbbildes, gesteuert durch die Zuverlässigkeit (CL) und die Chrominanz-Zuverlässigkeit (CC) eine Kombination verwendet wird von:

- entweder vertikel-zeitlich interpolierten oder vertikal interpolierten Pixeln für sowohl das zweite (OF2) als auch für der vierte (OF4) Ausgangs-Halbbild;
- Ersatzpixeln (fall back pixels), wobei in beiden Fällen die Ersatzpixel ohne Bewegungskompensation verwendet werden.

22. Verfahren nach einem der Ansprüche 18 bis 21, dadurch gekennzeichnet, daß der Prediktor (PRED) Chrominanz-Pixel (CH) verwendet, die horizontal mit einem Faktor von 4 in bezug auf die Luminanz-Pixel (O) unterabgetastet werden.

23. Verfahren nach Anspruch 21 oder 22, dadurch gekennzeichnet, daß zum Aufbau des zweiten (OF2) und des vierten (OF4) Chrominanz-Ausgangs-Halbbildes, gesteuert durch die Zuverlässigkeit (CL) bzw. die Chrominanz-Zuverlässigkeit (CC) eine Kombination von nur vertikal interpolierten Pixeln sowohl für das zweite (OF2) als auch für der vierte (OF4) Ausgangs-Halbbild und Ersatzpixeln verwendet wird, wobei die Ersatzpixel ohne Bewegungskompensation verwendet werden.

24. Vorrichtung zur bewegungskompensierten Aufwärts-Umwandlung von Zeilensprung-Videosignalen gemäß dem Verfahren nach einem der Ansprüche 1 bis 23, umfassend:

- Eingangs-Halbbilder empfangende zweite Speichermittel (FM1), deren Eingang und Ausgang mit einem Bewegungsabschätzer (ME) verbunden ist, der eine Bewegungsabschätzung von Halbbild zu Halbbild ausführt und Zeilenspeicher-Mittel (LD11 - 41, LD12 - 42) zur Speicherung von Pixeln enthält, die für ein Eingangs-Halbbild zur Berechnung von Bewegungsvektoren (MBMV) für Hauptblöcke und von Bewegungsvektoren (SBMV) für Unterblöcke (SB) verwendet werden, die kleiner als die Hauptblöke sind;
- nachfolgende erste Speichermittel (SPUFM) zur Umwandlung der Ausgangs-Halbbilder der zweiten Speichermittel in Halbbilder mit der doppelten Halbbildfrequenz;
- dritte Speichermittel (FM2), deren Eingang und Ausgang mit einem bewegungskompensierten Interpolator (MCI) verbunden ist, der in nachfolgenden Ausgangs-Halbbildern eine Bewegungskompensation von Halbbild zu Halbbild bei Ausgangssignalen ausführt, die von dem Ausgang der ersten Speichermittel abgeleitet werden, und der die Unterblock-Bewegungsvektoren von dem Bewegungs-Abschätzer empfängt, und der die bewegungskompensierten, aufwärtsumgewandelten Ausgangssignale (O) liefert.

25. Vorrichtung zur bewegungskompensierten Aufwärts-Umwandlung von Zeilensprung-Videosignalen nach dem Verfahren gemäß einem der Ansprüche 1 bis 23, umfassend:

- erste Speichermittel (SPUFM) für die Umwandlung von Quellen-Halbbildern (I) in Halbbilder mit der doppelten Halbbildfrequenz;
- nachfolgende zeite Speichermittel (FM1), deren Eingang und Ausgang mit einem Bewegungsabschätzer verbunden ist, der eine Bewegungsabschätzung von Halbbild zu Halbbild ausführt und Zeilenspeichermittel (LD11 - 41, LD12 - 42) enthält, um für ein Eingangs-Halbbild Pixel zu speichern, die zur Berechnung von Bewegungsvektoren (MBMV) für die Hauptblöcke (MB) und von Bewegungsvektoren (SBMV) für Unterblöcke (SB) verwendet werden, die kleiner als die Hauptblöcke sind;
- dritte Speichermittel (FM2), deren Eingang und Ausgang mit einem bewegungskompensierten Interpolator (MCI) verbunden ist, der in nachfolgenden Ausgangs-Halbbildern eine Bewegungskompensation von Halbbild zu Halbbild bei Ausgangssignalen ausführt, die von dem Ausgang der zweiten Speichermittel abgeleitet werden, und der die Unterblock-Bewegungsvektoren von dem Bewegungsabschätzer empfängt, und der die bewegungskompensierten aufwärtsumgewandelten Ausgangssignale (O) liefert.

26. Vorrichtung zur bewegungskompensierten Aufwärts-Umwandlung von Zeilensprung-Videosignalen nach dem Verfahren gemäß einem der Ansprüche 1 bis 23 umfassend:

- erste Speichermittel (SPUFM) für die Umwandlung von Quellen-Halbbildern (I) in Halbbilder mit der doppelten Frequenz;
- nachfolgende zweite Speichermittel (FM1), deren Eingang und Ausgang mit einem Bewegungsabschätzer (ME) verbunden ist, der eine Bewegungsabschätzung von Halbbild zu Halbbild ausführt und in Speichermitteln (RAM) Bewegungsvektoren für Hauptblöcke (MB) für ein Ausgangs-Halbbild speichert und anschließend für ein nachfolgendes Ausgangs-Halbbild aus den Hauptbild-Bewegungsvektoren Bewegungsvektoren (SBMV) für Unterblöcke (SB) berechnet, die kleiner als die Hauptblöcke sind;
- dritte Speichermittel (FM2), deren Eingang und Ausgang mit einem bewegungskompensierten Interpolator (MCI) verbunden ist, der in nachfolgenden Ausgangs-Halbbildern eine Bewegungskompensation von Halbbild zu Halbbild für Ausgangssignale ausführt, die von dem Ausgang der zweiten Speichermittel abgeleitet werden, und der die Unterblock-Bewegungsvektoren von dem Bewegungsabschätzer empfängt, und der die bewegungskompensierten aufwärtsumgewandelten Ausgangssignale (O) liefert.

27. Vorrichtung zur bewegungskompensierten Aufwärts-Umwandlung von Zeilensprung-Videosignalen gemäß dem Verfahren nach einem der Ansprüche 1 bis 23, umfassend:

- erste Speichermittel (SPUFM), die zur Umwandlung von Quellen-Halbbildern in Halbbilder mit der doppelten Halbbildfrequenz verwendet werden;
- nachfolgende zweite Speichermittel (FM), deren Eingangssignal von dem Ausgangssignal der ersten Speichermittel abgeleitet und dem ersten Eingang eines bewegungskompensierten Interpolators (MCI) zugeführt wird, der eine Bewegungskompensation von Halbbild zu Halbbild für Ausgangssignale ausführt, die von dem Ausgang der zweiten Speichermittel abgeleitet werden, und der Bewegungsinformationen von einem Bewegungsabschätzer (ME) empfängt, und der bewegungskompensierte, aufwärtsumgewandelte Ausgangssignale (O) liefert, wobei das Signal am zweiten Eingang des bewegungskompensierten Interpolators von dem Ausgangssignal der zweiten Speichermittel abgeleitet wird;

- den Bewegungsabschätzer (ME), der das Ausgangssignal der zweiten Speichermittel an seinem zweiten Eingang empfängt, und der eine Bewegungsabschätzung von Halbbild zu Halbbild ausführt, wobei das Signal am ersten Eingang dieses Bewegungsabschätzers von dem Ausgangssignal der ersten Speichermittel abgeleitet wird und der Bewegungsabschätzer Bewegungsvektoren (MBMV) für Hauptblöcke (MB) für ein Ausgangs-Halbbild berechnet und in Speichermitteln (RAM) speichert und danach für ein nachfolgendes Ausgangs-Halbbild aus dem Hauptblock Bewegungsvektoren (SBMV) für Unterblöcke berechnet, die kleiner sind als die Hauptblöcke.

**28.** Vorrichtung nach einem der Ansprüche 24 bis 27, dadurch gekennzeichnet, daß der bewegungskompensierte Interpolator (MCI) von räumlichen Rauschverminderungsmitteln (SF) und/oder nachfolgenden zeitlichen Rauschverminderungsmitteln (TF), insbesondere rekursiven zeitlichen Rauschverminderungsmitteln begleitet ist, wobei das Eingangssignal der räumlichen Rauschverminderungsmittel bzw. der zeitlichen Rauschverminderungsmittel von den Halbbildern mit der doppelten Halbbildfrequenz abgeleitet wird und der endgültige Ausgang der Rauschverminderungsmittel dem ersten Eingang des bewegungskompensierten Interpolators zugeführt wird.

**29.** Vorrichtung nach Anspruch 28, dadurch gekennzeichnet, daß die zeitlichen Rauschverminderungsmittel (TF) rekursive zeitliche Rauschverminderungsmittel sind.

**30.** Vorrichtung nach einem der Ansprüche 24 bis 29, dadurch gekennzeichnet, daß die Unterblock-Bewegungsvektoren (SNMV) aus den Hauptblock-Bewegungsvektoren (MBMV) berechnet werden, indem für jeden Ausgangs-Unterblock-Vektor ein Vektor von den Hauptblock-Vektoren der drei Blöcke (A, B; B, E; D; D, A) ausgewählt wird, die dem gegenwärtigen Unterblock einschließlich dem gegenwärtigen Hauptblock (C)am nächsten liegen.

**31.** Vorrichtung nach einem der Ansprüche 28 bis 30, dadurch gekennzeichnet, daß die räumliche Rauschverminderung (SF) nur für die Luminanz ausgeführt wird und daß die zeitliche Rauschverminderung (TF) für die Luminanz und/oder die Chrominanz ausgeführt wird.

**32.** Vorrichtung nach einem der Ansprüche 24 bis 31, dadurch gekennzeichnet, daß die bewegungskompensierte Interpolation (MCI) für Luminanz und Chrominanz ausgeführt wird.

**Revendications**

**1.** Méthode pour la conversion vers le haut compensée en mouvement de signaux vidéo entrelacés, dans laquelle des demi-images de fréquence de demi-images source sont converties (SPUFM) en vue de former des demi-images de fréquence de demi-images doublée et dans laquelle une estimation de mouvement (ME) est effectuée et une interpolation compensée en mouvement (MCI) sur lesdites demi-images de fréquence de demi-images doublée est effectuée, en utilisant des informations de mouvement (MV) à partir de ladite estimation de mouvement, **caractérisée en ce que** dans ladite estimation de mouvement des vecteurs de mouvement (MBMV) de blocs principaux (MB) et des vecteurs de mouvement (SBMV) de sous-blocs (SB) plus petits que lesdits blocs principaux sont calculés pour une demi-image d'entrée et les éléments d'image requis pour ce calcul sont stockés dans des moyens de mémoire de lignes (LD11 à 41, LD12 à 42) pour une demi-image d'entrée, tandis que ladite interpolation compensée en mouvement (MCI) est effectuée sur lesdits vecteurs de mouvement de sous-blocs dans des demi-images de sortie ultérieures.

**2.** Méthode selon la revendication 1, **caractérisée en ce que** lesdits vecteurs de mouvement de blocs principaux (MBMV) sont calculés et stockés (RAM) dans un moyen de mémoire pour une demi-image de sortie et que lesdits vecteurs de mouvement de sous-blocs (SBMV) sont ensuite calculés pour une demi-image de sortie ultérieure à partir desdits vecteurs de mouvement de blocs principaux stockés.

**3.** Méthode selon la revendication 1 ou 2, **caractérisée en ce qu'**une réduction de bruit spatiale (SF) est effectuée sur lesdites demi-images de fréquence de demi-images doublée avant ladite interpolation compensée en mouvement (MCI), en particulier en utilisant au moins certains desdits moyens de mémoire de lignes (LD11 à LD71, LD13 à LD73) en commun avec ladite réduction de bruit spatiale.

4. Méthode selon l'une quelconque des revendications 1 à 3, **caractérisée en ce qu'**une réduction de bruit temporelle (TF) est incluse dans ladite interpolation compensée en mouvement, en particulier une réduction de bruit temporelle récursive.

5. Méthode selon l'une quelconque des revendications 1 à 4, **caractérisée en ce que** pour effectuer ladite interpolation compensée en mouvement (MCI), les vecteurs de mouvement de sous-blocs (SBMV) sont calculés à partir desdits vecteurs de mouvement de blocs principaux (MBMV) en sélectionnant pour chaque vecteur de sous-bloc de sortie un vecteur à partir des vecteurs de mouvement de blocs principaux des trois blocs principaux (A, B ; B, E ; E, D ; D, A) situé le plus près du sous-bloc en cours comportant le bloc principal en cours (C).

6. Méthode selon l'une quelconque des revendications 3 à 5, **caractérisée en ce que** ladite réduction de bruit spatiale (SF) est effectuée sur la luminance uniquement et que ladite réduction de bruit temporelle (TF) est effectuée sur la luminance et/ou la chrominance.

7. Méthode selon l'une quelconque des revendications 1 à 6, **caractérisée en ce que** ladite interpolation compensée en mouvement (MCI) est effectuée pour la luminance et la chrominance.

8. Méthode selon l'une quelconque des revendications 1 à 7, **caractérisée en ce que** dans ladite interpolation compensée en mouvement (MCI) pour chaque paire de demi-images de source quatre demi-images de sortie (OF1, OF2, OF3, OF4) sont générées si bien que :

   - la première demi-image de sortie (OF1) est dérivée à partir de la première demi-image de source de la paire en cours ;
   - la deuxième demi-image de sortie (OF2) est une combinaison des première et deuxième demi-images de source de la paire en cours ;
   - les troisième (OF3) et quatrième (OF4) demi-images de sortie sont une combinaison de la deuxième demi-image de source de la paire en cours et de la première demi-image de source de la paire suivante.

9. Méthode selon l'une quelconque des revendications 1 à 8, **caractérisée en ce que** dans ladite estimation de mouvement (ME) une conversion proscan (figure 8) est utilisée sur une demi-image de source sur deux.

10. Méthode selon la revendication 9, **caractérisée en ce que** dans ladite estimation de mouvement (ME) ladite conversion proscan est basée sur une grille d'éléments d'image sous-échantillonnée horizontalement.

11. Méthode selon l'une quelconque des revendications 1 à 10, **caractérisée en ce que** dans ladite estimation de mouvement (ME) une correspondance de blocs bilatérale (figure 11) est effectuée.

12. Méthode selon l'une quelconque des revendications 1 à 11, **caractérisée en ce que** dans ladite estimation de mouvement (ME) une détection de structure périodique qui est utilisée pour corriger lesdits vecteurs de mouvement (MBMV) est effectuée.

13. Méthode selon l'une quelconque des revendications 1 à 12, **caractérisée en ce que** dans ladite estimation de mouvement (ME) une ou les deux composantes (MVH, MVV) desdits vecteurs de mouvement (MBMV) ont forcées vers zéro en fonction d'un niveau de bruit calculé (N).

14. Méthode selon l'une quelconque des revendications 5 à 13, **caractérisée en ce qu'**un filtrage moyen horizontal ou vertical est effectué sur une ou les deux composantes (SBMVH, SBMVV) desdits vecteurs de mouvement de sous-blocs (SBMV).

15. Méthode selon l'une quelconque des revendications 5 à 14, **caractérisée en ce que** pour les vecteurs de mouvement de sous-blocs (SBMV) une confiance (CL) est calculée à partir d'une erreur de sous-bloc (SE) et que pour la chrominance une confiance de chrominance (CC) fonction de ladite confiance (CL) peut être de plus calculée.

16. Méthode selon la revendication 15, **caractérisée en ce que** ladite réduction de bruit spatiale (SF) et/ou temporelle (TF) est commandée par lesdites confiance (CL) et confiance de chrominance (CC), respectivement.

**17.** Méthode selon l'une quelconque des revendications 3 à 16, **caractérisée en ce que** ladite réduction de bruit spatiale (SF) comporte un filtre directif, en particulier un filtre moyen.

**18.** Méthode selon l'une quelconque des revendications 4 à 17, **caractérisée en ce que** ladite réduction de bruit temporelle (TF) comporte un prédicteur (PRED) pour la compensation en mouvement des éléments d'image respectifs de la demi-image précédente (z-1).

**19.** Méthode selon la revendication 18, **caractérisée en ce que** ladite réduction de bruit temporelle récursive (TF) effectue une combinaison non linéaire d'éléments d'image à partir de la demi-image en cours à bruit réduit spatialement (z, CUF) et de la dernière demi-image de source à bruit réduit spatialement et/ou temporellement et compensée en mouvement (z-1, PPRF) provenant dudit prédicteur (PRED).

**20.** Méthode selon l'une quelconque des revendications 8 à 19, **caractérisée en ce qu'**à partir des erreurs de correspondance de blocs résultant de ladite estimation de mouvement (ME) un vecteur nul de bloc principal est calculé, lequel commande celui d'au moins deux types de filtre d'interpolation différents qui est utilisé pour construire la troisième demi-image de sortie (OF3), dans lequel un de ces types de filtres comporte une composante temporelle.

**21.** Méthode selon l'une quelconque des revendications 15 à 20, **caractérisée en ce que** pour construire la deuxième (OF2) et la quatrième (OF4) demi-image de sortie, commandée par lesdites confiance (CL) et confiance de chrominance (CC), respectivement, une combinaison :

- d'éléments d'image interpolés soit verticalement-temporellement, soit verticalement pour les deux, la deuxième (OF2) et la quatrième (OF4) demi-image de sortie ;
- d'éléments d'image de secours est utilisée, dans laquelle dans les deux cas les éléments d'image de secours sont utilisés sans compensation de mouvement.

**22.** Méthode selon l'une quelconque des revendications 18 à 21, **caractérisée en ce que** ledit prédicteur (PRED) utilise des éléments d'image de chrominance (CH) qui sont sous-échantillonnés horizontalement par un facteur de quatre par rapport aux éléments d'image de luminance (O).

**23.** Méthode selon l'une quelconque des revendications 21 ou 22, **caractérisée en ce que** pour construire la deuxième (OF2) et la quatrième (OF4) demi-image de sortie de chrominance, commandée par lesdites confiance (CL) et confiance de chrominance (CC), respectivement, une combinaison :

- d'éléments d'image interpolés verticalement uniquement pour les deux, la deuxième (OF2) et la quatrième (OF4) demi-image de sortie ;
- d'éléments d'image de secours est utilisée, dans laquelle dans les deux cas les éléments d'image de secours sont utilisés sans compensation de mouvement.

**24.** Appareil pour la conversion vers le haut compensée en mouvement de signaux vidéo entrelacés, lié à une méthode selon l'une quelconque des revendications 1 à 23 et comportant :

- un deuxième moyen de mémoire (FMI) recevant des demi-images d'entrée, dont l'entrée et la sortie sont connectées à un estimateur de mouvement (ME) qui effectue une estimation de mouvement de demi-image en demi-image et contient un moyen de mémoire de lignes (LD11 à 41, LD12 à 42) pour stocker les éléments d'image qui sont utilisés en vue de calculer les vecteurs de mouvement (MBMV) des blocs principaux (MB) et les vecteurs de mouvement (SBMV) des sous-blocs (SB) plus petits que lesdits blocs principaux pour une demi-image d'entrée ;
- un premier moyen de mémoire suivant (SPUFM) pour convertir les demi-images de sortie dudit deuxième moyen de mémoire en des demi-images d'une fréquence de demi-images doublée ;
- un troisième moyen de mémoire (FM2) dont l'entrée et la sortie sont connectées à un interpolateur compensé en mouvement (MCI) qui effectue dans des demi-images de sortie ultérieures une compensation de mouvement de demi-image en demi-image sur des signaux de sortie dérivés de la sortie dudit premier moyen de mémoire et qui reçoit lesdits vecteurs de mouvement de sous-blocs à partir dudit estimateur de mouvement et qui fournit les signaux de sortie convertis vers le haut compensés en mouvement (0).

**25.** Appareil pour la conversion vers le haut compensée en mouvement de signaux vidéo entrelacés, lié à une méthode selon l'une quelconque des revendications 1 à 23 et comportant :

- un premier moyen de mémoire (SPUFM) utilisé pour convertir les demi-images de source (I) en demi-images d'une fréquence de demi-images doublée ;
- un deuxième moyen de mémoire suivant (FMI) dont l'entrée et la sortie sont connectées à un estimateur de mouvement (ME) qui effectue une estimation de mouvement de demi-image en demi-image et qui contient un moyen de mémoire de lignes (LD11 à 41, LD12 à 42) pour stocker les éléments d'image qui sont utilisés en vue de calculer les vecteurs de mouvement (MBMV) des blocs principaux (MB) et les vecteurs de mouvement (SBMV) des sous-blocs (SB) plus petits que lesdits blocs principaux pour une demi-image d'entrée ;
- un troisième moyen de mémoire (FM2) dont l'entrée et la sortie sont connectées à un interpolateur compensé en mouvement (MCI) qui effectue dans les demi-images de sortie ultérieures une compensation de mouvement de demi-image en demi-image sur les signaux de sortie dérivés à partir de la sortie dudit deuxième moyen de mémoire et qui reçoit lesdits vecteurs de mouvement de sous-blocs à partir dudit estimateur de mouvement et qui fournit les signaux de sortie convertis vers le haut compensés en mouvement (O).

26. Appareil pour la conversion vers le haut compensée en mouvement de signaux vidéo entrelacés, lié à une méthode selon l'une quelconque des revendications 1 à 23 et comportant :

- un premier moyen de mémoire (SPUFM) utilisé pour convertir des demi-images de source (I) en demi-images d'une fréquence de demi-images doublée ;
- un deuxième moyen de mémoire suivant (FM1) dont l'entrée et la sortie sont connectées à un estimateur de mouvement (ME) qui effectue une estimation de mouvement de demi-image en demi-image et qui calcule et stocke dans un moyen de mémoire (RAM) les vecteurs de mouvement (MBMV) des blocs principaux (MB) pour une demi-image de sortie puis calcule pour une demi-image suivante à partir des vecteurs de mouvement de blocs principaux les vecteurs de mouvement (SBMV) des sous-blocs (SB) plus petits que lesdits blocs principaux ;
- un troisième moyen de mémoire (FM2) dont l'entrée et la sortie sont connectées à un interpolateur compensé en mouvement (MCI) qui effectue dans des demi-images de sortie ultérieures une compensation de mouvement de demi-image en demi-image sur des signaux de sortie dérivés à partir de la sortie dudit deuxième moyen de mémoire et qui reçoit lesdits vecteurs de mouvement de sous-blocs à partir dudit estimateur de mouvement et qui fournit les signaux de sortie convertis vers le haut compensés en mouvement (0).

27. Appareil pour la conversion vers le haut compensée en mouvement de signaux vidéo entrelacés, lié à une méthode selon l'une quelconque des revendications 1 à 23 et comportant :

- un premier moyen de mémoire (SPUFM) utilisé pour convertir des demi-images de source (I) en demi-image de fréquence de demi-images doublée ;
- un deuxième moyen de mémoire suivant (FM) dont le signal d'entrée est dérivé à partir du signal de sortie dudit premier moyen de mémoire et est passé à la première entrée d'un interpolateur compensé en mouvement (MCI) qui effectue une compensation de mouvement de demi-image en demi-image sur des signaux de sortie dérivés à partir de la sortie dudit deuxième moyen de mémoire et qui reçoit des informations de mouvement à partir d'un estimateur de mouvement (ME) et qui fournit les signaux de sortie convertis vers le haut compensés en mouvement (0), si bien que le signal au niveau de la deuxième entrée dudit interpolateur compensé en mouvement est dérivé à partir du signal de sortie dudit deuxième moyen de mémoire ;
- ledit estimateur de mouvement (ME) qui reçoit le signal de sortie dudit deuxième moyen de mémoire au niveau de sa deuxième entrée et qui effectue l'estimation de mouvement de demi-image en demi-image, si bien que le signal au niveau de la première entrée de cet estimateur de mouvement est dérivé à partir du signal de sortie dudit premier moyen de mémoire et l'estimateur de mouvement calcule et stocke dans le moyen de mémoire (RAM) des vecteurs de mouvement (MBMV) des blocs principaux (MB) pour une demi-image de sortie et calcule ensuite pour une demi-image de sortie ultérieure à partir desdits vecteurs de mouvement de blocs principaux les vecteurs de mouvement (SBMV) des sous-blocs (SB) plus petits que lesdits blocs principaux.

28. Appareil selon l'une quelconque des revendications 24 à 27, **caractérisé en ce que** ledit interpolateur compensé en mouvement (MCI) s'accompagne d'un moyen de réduction de bruit spatiale (SF) et/ou d'un moyen de réduction de bruit temporelle suivant (TF), en particulier un moyen de réduction de bruit temporelle récursive, si bien que le signal d'entrée dudit moyen de réduction de bruit spatiale ou dudit moyen de réduction de bruit temporelle, respectivement, est dérivé desdites demi-images de fréquence de demi-images doublée et la sortie finale du moyen de réduction de bruit est passée à la première entrée dudit interpolateur compensé en mouvement.

**29.** Appareil selon la revendication 28, **caractérisé en ce que** lesdits moyens de réduction de bruit temporelle (TF) sont des moyens de réduction de bruit temporelle récursifs.

**30.** Appareil selon l'une quelconque des revendications 24 à 29, **caractérisé en ce que** lesdits vecteurs de mouvement de sous-blocs (SBMV) sont calculés à partir desdits vecteurs de mouvement de blocs principaux (MBMV) en sélectionnant pour chaque vecteur de sous-bloc de sortie un vecteur à partir des vecteurs de mouvement de blocs principaux des trois blocs principaux (A, B ; B, E ; E, D ; D, A) situé le plus près du sous-bloc en cours comportant le bloc principal en cours (C).

**31.** Appareil selon l'une quelconque des revendications 28 à 30, **caractérisé en ce que** ladite réduction de bruit spatiale (SF) est effectuée sur la luminance uniquement et que ladite réduction de bruit temporelle (TF) est effectuée sur la luminance et/ou la chrominance.

**32.** Appareil selon l'une quelconque des revendications 24 à 31, **caractérisé en ce que** ladite interpolation compensée en mouvement (MCI) est effectuée pour la luminance et la chrominance.

Fig.1

50Hz

SPUFM

100Hz

FM1

PTD1

10H
LD28

ME

LD21

LD22

N

MV,CL

SF
LD23

TF

N,CL

MV

PRED
LD24

FM2

SW1

EOL

OOL

LD27

N

MCI

LD25

LD26

100Hz

**Fig.2**

Fig.3

Fig.4

EP 0 735 746 B1

EP 0 735 746 B1

**Fig.5**

**Fig.6**

29

**Fig.7A**

I — 50Hz → SPUFM — 100Hz → LD1 → PTD1 → SF (LD73)

TF ← N,CL → FM → LD2 → SW2 (F3/4, F1/2) → PTD2

MV → PRED — LD74

ME — LD71, LD72, RAM — MV+N+CL — SW1 (EOL, 00L) — LD77

MCI — LD75, LD76 → 100 Hz

**Fig.7B**

| F1 | F3 | F5 | F7 |
|----|----|----|----|
| 1  | 1  | 1  | 1  |
| 2  | 2  | 2  | 2  |
| 3  | 2  | 2  | 2  |
| 3  | 3  | 3  | 3  |
| 4  | 4  | 4  | 4  |
| 5  | 4  | 4  | 3  |
| 5  | 5  | 5  | 5  |

EP 0 735 746 B1

**Fig.8**

**Fig.9**

**Fig.10**

H

V

**Fig.11**

SB                    MB

PF
( z - 1 )

CF
( z )

MV

SWW        MB        SWW        **Fig.12**

MVV                                    MVH

z -1    z

z

□ □ □ □ □ □ □ □ □ □ □
-16  -12  -8  -4  0  +4  +8  +12

+2    -2

z -1 □

0
□    □

z □
-14  -10  -6  -2  +2  +6  +10  +14

A

z -1 □

B                    **Fig.13**

**Fig.14**

MVH= -16          MVH= -8          MVH= 0          MVH= +8

(z)

(z-1)

**Fig.15**

A          B          C          D

MVUP          UPB

LEB

MVLE

CERR

MVH

■ = MBE

▓ = MRE

**2** = 2 MRE

**1** = MINRE = MINBE

▨ = CHR

**Fig.16**

**Fig.17**

**Fig.18**

**Fig.19**

**Fig.20**

**Fig.21**

**Fig.22**

**Fig.23**

**Fig.24**

MVV=+2

F1     F3     F1'

× OF2 ○     ×
○     □ ×   ○     ×
×     ○     ×
○     □ ×   ○     ×
f ×              ×
○     □ ×g
i ×         ○ gh  ×
○     □ ×h
×     ○     ×

**A**

MVH=+4

L n+1                              gh
F3  ○   ○   ○   ○   ○   ○   ○   ○   ○   ○   ○
   CI  CH  CI  CH  CI  CH  CI
OL n  □  □  □  □  □  □  □  □  □  □  □  □
F2   CO  CO  CO  CO  CO  CO  CO
L n-1 × × × × × × × × × × × × × ×
F1   CI  CH  CI  CH  CI  CH  CI
                 f

**B**

## Fig.25

MVV=0

F1     F3     F5

×      ○ OF4 ×
×      × □ ○
×      ○ × □ ×
×      × □ ○
×      ○ × j
i ×─────□─→○ jk
×      ○ × × k
×      × □ ○
×      ○ ×

**A**

                  j/k    MVH=-8
L n  ○   ○   ○   ○   ○   ○   ○   ○   ○   ○   ○
F5   CI  CH  CI  CH  CI  CH  CI
OL n □  □  □  □  □  □  □  □  □  □  □  □
F4   CO  CO  CO  CO  CO  CO  CO
L n  × × × × × × × × × × × × × ×
F3   CI  CH  CI  CH  CI  CH  CI
                              i

**B**

## Fig.26

## Fig.27

**Fig.28**